(19) Europäisches Patentamt
European Patent Office
Office européen des brevets

(11) **EP 2 546 053 B1**

(12) **EUROPEAN PATENT SPECIFICATION**

(45) Date of publication and mention
of the grant of the patent:
**11.12.2013 Bulletin 2013/50**

(51) Int Cl.:
*B32B 5/16* (2006.01)          *B32B 27/32* (2006.01)
*C09J 7/02* (2006.01)          *C09J 133/04* (2006.01)
*C09J 133/06* (2006.01)

(21) Application number: **12175817.1**

(22) Date of filing: **11.07.2012**

(54) **Double-sided pressure-sensitive adhesive sheet**

Doppelseitige druckempfindliche Klebefolie

Feuille adhésive sensible à la pression double face

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2011 JP 2011156359**

(43) Date of publication of application:
**16.01.2013 Bulletin 2013/03**

(73) Proprietor: **NITTO DENKO CORPORATION
Osaka (JP)**

(72) Inventors:
• **Tamura, Akinori
Ibaraki-shi, Osaka (JP)**
• **Nakayama, Naoki
Ibaraki-shi, Osaka (JP)**
• **Wada, Hiroshi
Ibaraki-shi, Osaka (JP)**

(74) Representative: **Grünecker, Kinkeldey,
Stockmair & Schwanhäusser
Leopoldstrasse 4
80802 München (DE)**

(56) References cited:
**EP-A- 2 025 506     DE-A1-102010 030 537**

## Description

Technical Field

The present invention relates to a double-sided pressure-sensitive adhesive sheet, more specifically, a double-sided pressure-sensitive adhesive sheet including a polyolefin foam substrate and excellent in both waterproof property and impact resistance.

Background Art

Double-sided pressure-sensitive adhesive sheets with substrate which include a pressure-sensitive adhesive layer on both surfaces of the substrate have conventionally been used in various industrial fields, for example, as a highly reliable bonding or fixing means in assembly of members or bonding between members. As these double-sided pressure-sensitive adhesive sheets with substrate, those using a nonwoven fabric (refer to Patent Document 1) or paper as a substrate and those using a plastic film as a substrate are known.

Electronic devices such as mobile phones have recently been required to have a waterproofing function so that double-sided pressure-sensitive adhesive sheets with substrate used for fixing parts of such electronic devices have also been required to have a function of preventing water from penetrating the electronic devices (this function may be called "waterproof property" or "water stopping property"). Double-sided pressure-sensitive adhesive sheets using a nonwoven fabric or paper as the material of the substrate, however, have problems in waterproof property because the fabric or paper permits impregnation of water. Double-sided pressure-sensitive adhesive sheets using a plastic film as a substrate are, on the other hand, inferior in followability to uneven surfaces due to rigidity of the plastic film. When such double-sided pressure-sensitive adhesive sheets are used in a portion different in step, lift-off between the sheet and adherend occurs. Thus, it is difficult to achieve good waterproof property.

As electronic devices such as mobile phones or smartphones have enhanced performances in recent years, members such as lens fixed with a double-sided pressure-sensitive adhesive sheet have been heavier. Double-sided pressure-sensitive adhesive sheets to be used for electronic devices are therefore required to have a function capable of fixing or retaining members firmly (which function may be called "impact resistance") without peeling even when a strong impact is applied to such electronic devices due to falling or the like. In particular, with expansion of modes or environments where electronic devices are used, double-sided pressure-sensitive adhesive sheets are required to exhibit excellent impact resistance even under more severe environmental conditions (particularly, low-temperature environment).

Patent Document 1: JP 2001-152111 A

SUMMARY OF THE PRESENT INVENTION

In manufacture of products using a double-sided pressure-sensitive adhesive sheet, when they are found to have a defect as a result of a test during or after manufacture, peeling (removal) of the double-sided pressure-sensitive adhesive sheet from a member used for the products, that is, so-called "rework", can be conducted in order to recycle the member. In addition, when products after use are disassembled or members are recovered from such products, a double-sided pressure-sensitive adhesive sheet used for them is sometimes peeled from the members. In such rework, disassembly of products, or recovery of members, a pressure-sensitive adhesive layer or substrate of the double-sided pressure-sensitive adhesive layer is damaged or a portion of the pressure-sensitive adhesive layer remains on the member (adherend) after peeling (which phenomenon may be called "adhesive residue"). Such defects cause problems such as deterioration in removability (rework property). The deterioration in removability occurs mainly because of a time-dependent increase in pressure-sensitive adhesive force of the double-sided pressure-sensitive adhesive sheet to an adherend or an insufficient anchoring property of the pressure-sensitive adhesive layer to the substrate of the double-sided pressure-sensitive sheet.

The present invention provides a double-sided pressure-sensitive adhesive sheet excellent in both waterproof property (water stopping property) and impact resistance.
In addition, the present invention provides a double-sided pressure-sensitive adhesive sheet prevented from a time-dependent increase in pressure-sensitive adhesive force to an adherend and at the same time, including a pressure-sensitive adhesive layer with high anchoring property to the substrate of the sheet, thus having excellent removability.

The present inventors have carried out an extensive investigation in order to overcome the above problems. As a result, it has been found that a double-sided pressure-sensitive adhesive sheet including, as the substrate thereof, a polyolefin foam substrate having a volume percentage of closed cells and the degree of crosslinking which are controlled to specific ranges, respectively, and including, on both surfaces of the substrate, an acrylic pressure-sensitive adhesive layer formed from a pressure-sensitive adhesive composition containing at least a specific acrylic polymer and a tackifying resin is excellent in both waterproof property and impact resistance, and thus, the present invention has been accomplished.

That is, the present invention provides a double-sided pressure-sensitive adhesive sheet including a polyolefin foam substrate and an acrylic pressure-sensitive adhesive layer on both surfaces of the polyolefin foam substrate, wherein the polyolefin foam substrate has a volume percentage of closed cells of 70% or more and a degree of crosslinking of from 3 to 60 wt%, and

the acrylic pressure-sensitive adhesive layer is formed from a pressure-sensitive adhesive composition containing: an acrylic polymer formed from a component including, as an essential monomer component thereof, an alkyl (meth)acrylate having a linear or branched alkyl group; and a tackifying resin.

In the double-sided pressure-sensitive adhesive sheet, the acrylic pressure-sensitive adhesive layer preferably has a gel fraction of from 10 to 50 wt%.

In the double-sided pressure-sensitive adhesive sheet, the acrylic polymer preferably has a degree of dispersion [(weight average molecular weight)/(number average molecular weight)] of from 3 to 10.

In the double-sided pressure-sensitive adhesive sheet, the acrylic polymer preferably includes a component having a molecular weight of 100,000 or less in an amount of from 10 to 30 wt% based on the acrylic polymer.

In the double-sided pressure-sensitive adhesive sheet, the acrylic pressure-sensitive adhesive layer preferably has a haze of from 3 to 30%.

In the double-sided pressure-sensitive adhesive sheet, the acrylic polymer is preferably formed from a monomer component including a butyl acrylate in an amount of 60 wt% or more based on a total amount (100 wt%) of the monomer component forming the acrylic polymer.

In the double-sided pressure-sensitive adhesive sheet, the acrylic polymer is preferably formed from a monomer component including an acrylic acid in an amount of from 1 to 5 wt% based on a total amount (100 wt%) of the monomer component forming the acrylic polymer.

In the double-sided pressure-sensitive adhesive sheet, the pressure-sensitive adhesive composition preferably contains from 5 to 60 parts by weight of the tackifying resin based on 100 parts by weight of the acrylic polymer.

Since the double-sided pressure-sensitive adhesive sheet of the present invention has the above constitution, it is excellent in waterproof property (water stopping property) and impact resistance. In addition, the double-sided pressure-sensitive adhesive sheet of the present invention exhibits excellent removability when using an acrylic polymer whose degree of dispersion or ratio of components having a molecular weight of 100,000 or less has been controlled to fall within a specific range, because the acrylic pressure-sensitive adhesive layer has an improved anchoring property to the polyolefin foam substrate. Moreover, the double-sided pressure-sensitive adhesive sheet of the present invention exhibits further excellent removability when using a specific composition for a pressure-sensitive adhesive composition forming the acrylic pressure-sensitive adhesive layer, thereby suppressing a time-dependent increase in pressure-sensitive adhesive force to the adherend. It is to be noted that the term "removability" as used herein means both resistance to breakage of the acrylic pressure-sensitive adhesive layer or polyolefin foam substrate during peeling of a double-sided pressure-sensitive adhesive sheet from an adherend and a property not allowing an acrylic pressure-sensitive adhesive layer or polyolefin foam substrate to remain on the surface of the adherend after the peeling.

BRIEF DESCRIPTION OF THE DRAWINGS

FIG. 1 is a schematic view (plan view) showing an evaluation sample (polyolefin foam substrate) fixed to an evaluation plate for use in a dent test.

FIG. 2 is a schematic view (perspective view) for describing a method of a dent test.

FIG. 3 is a schematic view (front view) showing a weight used in the dent test.

FIG. 4 is a schematic view (side view) showing the weight used in the dent test.

FIG. 5 is a schematic view (front view) showing one example of a state in which a load is applied to a polyolefin foam substrate (evaluation sample) by using the weight in the dent test.

FIG. 6 is a schematic view (front view) showing an example of a state of the polyolefin foam substrate (evaluation sample) after application of a load to the polyolefin foam substrate by using the weight in the dent test.

FIG. 7 is a schematic view (cross-sectional view) showing an evaluation sample to be used for the measurement of interlayer peeling strength and evaluation of an anchoring property.

FIG. 8 is a schematic view (cross-sectional view) for describing a method of measuring the interlayer peeling strength and a method of evaluating the anchoring property.

FIGS. 9(a) and 9(b) are schematic views showing an evaluation sample with a weight to be used for evaluation of impact resistance, in which FIG. 9(a) is a plan view and FIG. 9(b) is a Y-Y cross-sectional view in FIG. 9(a).

FIGS. 10(a) and 10(b) are schematic views showing an evaluation sample to be used for evaluation of waterproof property, in which FIG. 10(a) is a plan view and FIG. 10(b) is a Z-Z cross-sectional view in FIG. 10(a).

DETAILED DESCRIPTION OF THE PRESENT INVENTION

The double-sided pressure-sensitive adhesive sheet of the present invention has an acrylic pressure-sensitive adhesive layer on both sides of a polyolefin foam substrate. The term "pressure-sensitive adhesive sheet" as used herein includes a tape-shaped one, that is, "pressure-sensitive adhesive tape". The surface of an acrylic pressure-sensitive adhesive layer in the double-sided pressure-sensitive adhesive sheet is sometimes called "pressure-sensitive adhesive surface". In addition, the term "machine direction (MD)" as used herein means a direction of a manufacture line in the manufacturing steps of the double-sided pressure-sensitive adhesive sheet and generally, it means a length direction in the case of a long sheet. On the other hand, the term "transverse direction (TD)" means a direction perpendicular to the machine direction.

[Polyolefin foam substrate]

The polyolefin foam substrate in the double-sided pressure-sensitive adhesive sheet of the present invention is a substrate (foam substrate) having cells (cellular structure) formed by a foam of polyolefin resin. The polyolefin foam substrate may be in the form of a single layer or a composite layer (multilayer). The double-sided pressure-sensitive adhesive sheet of the present invention is excellent in followability to uneven surfaces, waterproof property, and impact resistance because the double-sided pressure-sensitive adhesive sheet has a polyolefin foam substrate.

As the polyolefin resin constituting the polyolefin foam substrate, known or conventionally-used polyolefin resins can be used. Although not particularly limited, examples thereof include polyethylenes such as low-density polyethylene (LDPE), linear low-density polyethylene (LLDPE), high density polyethylene (HDPE), and linear low-density polyethylene polymerized by metallocene catalyst, polypropylene, ethylene-propylene copolymers, and ethylene-vinyl acetate copolymers. These  polyolefin resins may be used either alone or in combination of two or more thereof. Of the polyolefin resins, polyethylene and polypropylene are preferred, and polyethylene is more preferred. This means that the polyolefin foam substrate is preferably a polyethylene foam substrate or a polypropylene foam substrate, and is more preferably a polyethylene foam substrate.

The volume percentage of closed cells of the polyolefin foam substrate is 70% or more (for example, from 70 to 100%), and preferably from 80 to 100%. When the volume percentage of closed cells is adjusted to 70% or more, the resulting double-sided pressure-sensitive adhesive sheet has improved waterproof property (water stopping property). The term "volume percentage of closed cells" as used herein means a value as measured using a polyolefin foam substrate according to the following method.

(Measurement method of volume percentage of closed cells)

A polyolefin foam substrate is cut to obtain a test specimen having a square planar shape, 5 cm on a side, and having a predetermined thickness. Based on the thickness of the test specimen measured, an apparent volume $V_1$ ($cm^3$) of the test specimen is calculated and at the same time, the weight $W_1$ (g) of the test specimen is measured. Then, an apparent volume $V_2$ ($cm^3$) of the test specimen occupied by cells is calculated based on the following equation (the density of the resin constituting the test specimen is set at 1 $g/cm^3$).

$$\text{Apparent volume } V_2 \text{ occupied by cells} = V_1 - W_1$$

Next, the test specimen is submerged in distilled water of 23°C to the depth of 100 mm from the water surface and pressure of 15 kPa is applied for 3 minutes to the test specimen. Then, the test specimen from water is taken out, water attached to the surface of the test specimen is removed, the weight $W_2$ (g) of the resulting test specimen is measured, and the volume percentage of closed cells is calculated according to the following equation.

$$\text{Volume percentage of closed cells} = 100 - \{100 \times (W_2 - W_1)/V_2\}$$

The volume percentage of closed cells is a value providing an indication of the percentage of closed cells among cells (cellular structure) (usually including closed cells (closed cellular structure) and/or open cells (open cellular structure)) present in the foam substrate. The term "closed cells" means cells surrounded with a wall and not connected to other cells, while the term "open cells" means cells connected to other cells. The greater the volume percentage of closed cells in the polyolefin foam substrate is, the greater a ratio of closed cells in cells present in the polyolefin foam substrate is. In such a case, the foam substrate does not permit easy penetration of water and can exhibit high waterproof property (water stopping property).

The degree of crosslinking of the polyolefin foam substrate is from 3 to 60 wt%, preferably from 5 to 50 wt%, more preferably from 10 to 40 wt%, and still more preferably from 15 to 35 wt%. When the degree of crosslinking is adjusted to 3 wt% or more, cells present in the vicinity of the surface are not easily broken during stretching of the polyolefin foam substrate and roughness on the surface due to breakage of cells is prevented, leading to improvement in the adhesiveness of the acrylic pressure-sensitive adhesive layer. On the other hand, when the degree of crosslinking is adjusted to 60 wt% or less, the resulting foam substrate does not become too hard and has adequate flexibility, and as a result, a double-sided pressure-sensitive adhesive sheet has improved impact resistance. The term "degree of crosslinking" as used herein means a value as measured using the polyolefin foam substrate according to the following method.

(Measurement method of degree of crosslinking)

A test specimen weighing about 100 mg is sampled from a polyolefin foam substrate and the weight A (mg) of the test specimen is precisely measured. Next, the test specimen is submerged in 30 $cm^3$ of xylene of 120°C. The test specimen is allowed to stand for 24 hours, followed by filtering through a 200-mesh metal sieve to collect insoluble components on the metal sieve. After vacuum drying, the weight B (mg) of the insoluble components is precisely measured. The degree of crosslinking (unit: wt%) of the polyolefin foam substrate is calculated by using the weight A and the weight B according to the following equation.

$$\text{The degree of crosslinking (wt\%)} = 100 \times (B/A)$$

The degree of crosslinking is a value providing an indication of the degree of crosslinking of a polymer (polyolefin resin) constituting the polyolefin foam substrate. This means that the greater the degree of crosslinking of the polyolefin foam substrate is, the denser the crosslinked structure of the polyolefin resin constituting the substrate is. In particular, the double-sided pressure-sensitive adhesive sheet of the present invention can exhibit excellent impact resistance when the degree of crosslinking of the polyolefin foam substrate is controlled to 60 wt% or less.

Although the average cell diameter of the polyolefin foam substrate is not particularly limited, it is preferably from 10 to 1,000 $\mu$m, and more preferably from 20 to 600 $\mu$m from the standpoint of the strength of the substrate. When the average cell diameter is adjusted to 10 $\mu$m or more, the double-sided pressure-sensitive adhesive sheet tends to have improved impact resistance. On the other hand, when the average cell diameter is adjusted to 1,000 $\mu$m or less, the double-sided pressure-sensitive adhesive sheet tends to have improved waterproof property (water stopping property). The average cell diameter can be measured, for example, by using an optical microscope.

Although the density (apparent density) of the polyolefin foam substrate is not particularly limited, it is preferably from 0.1 to 0.5 $g/cm^3$, and more preferably from 0.2 to 0.4 $g/cm^3$ from the standpoint of removability. When the polyolefin foam substrate has a density of 0.1 $g/cm^3$ or more, the resulting double-sided pressure-sensitive adhesive sheet has improved strength (particularly, interlayer peeling strength) and tends to have improved impact resistance and removability. On the other hand, when the polyolefin foam substrate has a density of 0.5 $g/cm^3$ or less, the resulting double-sided pressure-sensitive adhesive sheet tends to have improved step-followability because excessive deterioration in flexibility does not occur. When the double-sided pressure-sensitive adhesive sheet has a good step-followability, even if it is laminated to an adherend having a step, a gap hardly occurs between the sheet and the surface of the adherend, leading to improvement in waterproof property. The density (apparent density) can be measured, for example, according to the method prescribed in JIS K6767.

Although the expansion ratio of the polyolefin foam substrate is not particularly limited, it is preferably from 2 to 10 cc/g, and more preferably from 2.5 to 5 cc/g. When the expansion ratio is adjusted to 2 cc/g or more, the resulting double-sided pressure-sensitive adhesive sheet tends to have improved flexibility and improved step-followability. When the expansion ratio is adjusted to 10 cc/g or less, on the other hand, the resulting double-sided pressure-sensitive adhesive sheet has improved strength (particularly, interlayer peeling strength) and tends to have improved impact resistance and removability. As used herein, the "expansion ratio" of the polyolefin foam substrate is defined as the reciprocal of the density (apparent density) as measured according to the method prescribed in JIS K 6767.

The polyolefin foam substrate can be formed using a known or conventional formation method (for example, a method using a foaming agent). Alternatively, a commercially available product can be used as the polyolefin foam substrate.

The surface of the polyolefin foam substrate may be subjected to known surface treatment, for example, chemical or physical surface treatment such as undercoating treatment, corona discharge treatment, and plasma treatment. More specifically, in order to improve the adhesiveness with the acrylic pressure-sensitive adhesive layer, the surface of the polyolefin foam substrate may be subjected to conventional surface treatment, for example, oxidation treatment through a chemical or physical process, such as corona discharge treatment, chromic acid treatment, exposure to ozone, exposure to flame, exposure to a high-voltage electric shock, and treatment with ionizing radiation. Alternatively, it may be subjected to coating treatment with an undercoating agent or release agent.

The polyolefin foam substrate may contain various additives according to necessity. Examples thereof include fillers (such as inorganic fillers and organic fillers), anti-aging agents, antioxidants, ultraviolet absorbers, antistatic agents, lubricants, plasticizers, flame retardants, and surfactants.

Although the thickness of the polyolefin foam substrate can be selected as needed, depending on the strength, flexibility, using purpose, or the like and is not particularly limited, it is preferably from 30 to 1,500 $\mu$m, and more preferably from 50 to 1200 $\mu$m. When the polyolefin foam substrate has a thickness of 30 $\mu$m or more, the strength is improved and the double-sided pressure-sensitive adhesive sheet tends to have improved impact resistance and removability. On the other hand, the polyolefin foam substrate having a thickness 1,500 $\mu$m or less is advantageous for size reduction or weight reduction of products.

In particular, when the double-sided pressure-sensitive adhesive sheet of the present invention is used for heavy products such as large-sized flat panel displays of personal computer or television, the thickness of the polyolefin foam substrate is, for example, from 200 to 1,500 $\mu$m (more preferably from 300 to 1,200 $\mu$m). On the other hand, when the pressure-sensitive adhesive sheet of the present invention is used for mobile electronic devices such as mobile phones or smartphones, the thickness of the polyolefin foam substrate is preferably, for example, from 30 to 400 $\mu$m (more preferably, from 50 to 300 $\mu$m).

A ratio (which will be called "dent resistance") of the thickness of the polyolefin foam substrate after application of a 1-kgf load for 15 seconds with a weight having a wedge-shaped tip portion, as measured by a dent test which will be described below, to the original thickness is not particularly limited, but it is preferably 20% or more, more preferably 40% or more, and still more preferably 60% or more. The dent resistance is a physical property indicating resistance (un-deformability) of the polyolefin foam substrate to dent formation when a load is applied. The polyolefin foam substrate having dent resistance of 20% or more has adequate hardness and is resistant to breakage so that the double-sided pressure-sensitive adhesive sheet exhibits excellent removability.

The dent resistance of the polyolefin foam substrate can be measured using the following dent test.

[Dent test]

(Preparation of evaluation sample)

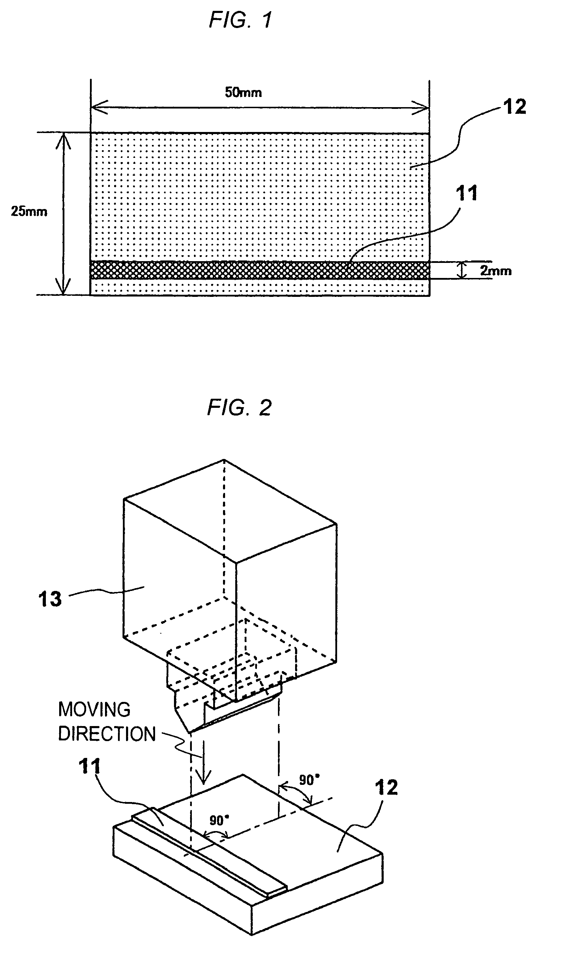

FIG. 1 is a schematic view (plan view) showing a polyolefin foam substrate (evaluation sample) fixed to an evaluation plate for use in a dent test. In FIG. 1, 11 indicates a polyolefin foam substrate and 12 indicates an evaluation plate.

A polyolefin foam substrate is cut into a piece of 2 mm width and 50 mm length to prepare an evaluation sample. Then, the polyolefin foam substrate 11 (evaluation sample) is attached to the evaluation plate 12 (acrylic plate, size: 25 mm width and 50 mm length with a thickness of 5 mm) (refer to FIG. 1).

(Measurement of dent resistance)

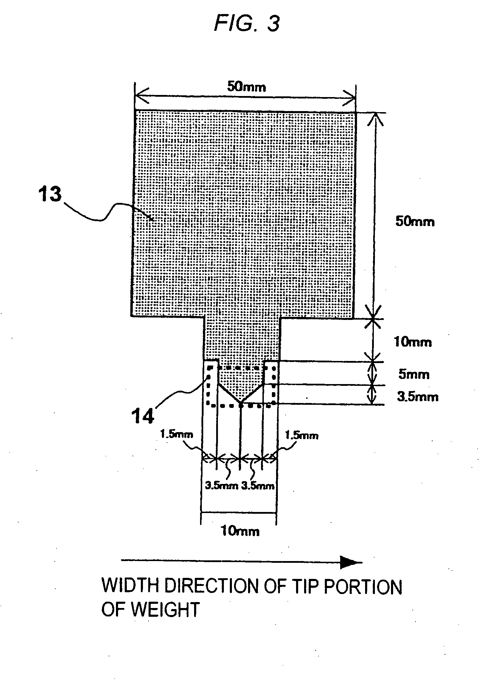

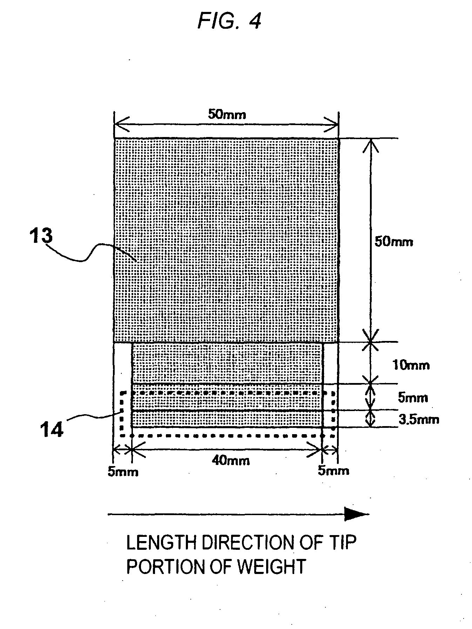

FIG. 2 is a schematic view (perspective view) for describing the method of the dent test. In FIG. 2, 13 indicates is a weight. FIG. 3 is a front view (schematic view) showing a weight to be used in the dent test and FIG. 4 is a side view (schematic view) showing the weight. In FIGS. 3 and 4, a portion surrounded by 14 shows a tip portion of the weight 13. As shown in FIGS. 3 and 4, the tip portion 14 of the weight 13 has a wedge shape.

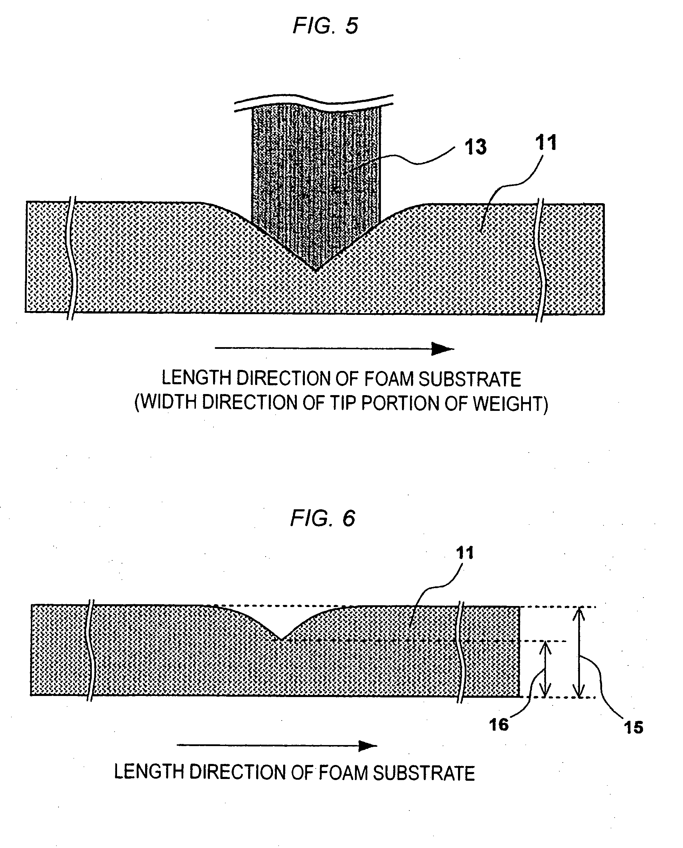

As shown in FIG. 2, the evaluation plate 12 to which the polyolefin foam substrate 11 has been attached is placed on a horizontal pedestal and it is fixed thereto. Then, a load is applied to the polyolefin foam substrate 11 by placing the 1-kg weight 13 downward in the vertical direction. At this time, the weight 13 is placed on the polyolefin foam substrate 11 to make the length direction of the polyolefin foam substrate 11 perpendicular to the longer direction of the tip portion 14 of the weight and to make the longer direction of the tip portion 14 of the weight perpendicular to the vertical direction (refer to FIG. 2). FIG. 5 is a schematic view (front view) showing one example of a state in which a load is applied to the polyolefin foam substrate 11 by using the weight 13.

After placing the weight 13 on the polyolefin foam substrate 11 for 15 seconds, the weight 13 is removed. FIG. 6 is a schematic view (front view) showing one example of a state of the polyolefin foam substrate 11 after application of a load to the polyolefin foam substrate by using the weight. Within one minute after removal of the weight 13, a thickness 16 (which will be called "Y2") of the most dented portion of the polyolefin foam substrate 11 and a thickness 15 (which will be called "Y1") of an undented portion (refer to FIG. 6) are measured. Here, Y1 is equal to the thickness (original thickness) of the polyolefin foam substrate 11 before application of a load with the weight 13. Then, dent resistance is calculated according to the following equation:

$$\text{Dent resistance (\%)} = Y2/Y1 \times 100$$

Although no particular limitation is imposed on Y1 and Y2, they can be measured by processing (for example, an image editing software appended to the microscope can be used) images observed using, for example, an optical microscope (trade name "Digital Microscope VHX-1000", manufactured by KEYENCE CORPORATION) at a magnification of 100.

The dent resistance of the polyolefin foam substrate can be controlled, for example, by the expansion ratio or composition of the polyolefin foam substrate.

Although the elongation of the polyolefin foam substrate in the machine direction (MD) is not particularly limited, it is preferably from 200 to 800%, and more preferably from 400 to 600%. When the polyolefin foam substrate has elongation in the machine direction of 200% or more, the double-sided pressure-sensitive adhesive sheet has improved impact resistance and followability to uneven surfaces. On the other hand, when the polyolefin foam substrate has elongation in the machine direction of 800% or less, the substrate has improved strength and drop characteristics.

Although the elongation of the polyolefin foam substrate in the transverse direction (TD) is not particularly limited, it is preferably from 50 to 800%, and more preferably from 100 to 600%. When the polyolefin foam substrate has elongation in the transverse direction of 50% or more, the double-sided pressure-sensitive adhesive sheet has improved impact resistance and followability to uneven surfaces. On the other hand, when the polyolefin foam substrate has elongation in the transverse direction of 800% or less, the resulting substrate has improved strength and drop characteristics. The elongation (elongation in the machine direction, elongation in the transverse direction) of the polyolefin foam substrate is measured according to JIS K 6767.

The elongation of the polyolefin foam substrate can be controlled, for example, by the degree of crosslinking or expansion ratio.

Although the tensile strength of the polyolefin foam substrate in the machine direction (MD) is not particularly limited, it is preferably from 0.5 to 20 MPa, and more preferably from 1 to 15 MPa. When the polyolefin foam substrate has tensile strength in the machine direction of 0.5 MPa or more, the double-sided pressure-sensitive adhesive sheet has improved removability. On the other hand, when the polyolefin foam substrate has tensile strength in the machine direction of 20 MPa or less, the double-sided pressure-sensitive adhesive sheet has improved impact resistance and followability to uneven surfaces.

Although the tensile strength of the polyolefin foam substrate in the transverse direction (TD) is not particularly limited, it is preferably from 0.2 to 20 MPa, and more preferably from 0.5 to 15 MPa. When the polyolefin foam substrate has a tensile strength in the transverse direction of 0.2 MPa or more, the double-sided pressure-sensitive adhesive sheet has improved removability. On the other hand, when the polyolefin foam substrate has a tensile strength in the transverse direction of 20 MPa or less, the double-sided pressure-sensitive adhesive sheet has improved impact resistance and followability to uneven surfaces. The tensile strength (tensile strength in the machine direction, tensile strength in the transverse direction) of the polyolefin foam substrate is measured according to JIS K 6767.

The tensile strength of the polyolefin foam substrate can be controlled, for example, by the degree of crosslinking or expansion ratio.

Although not particularly limited, the polyolefin foam substrate has a compressive hardness, in terms of a load as measured by sandwiching a stack of the polyolefin foam substrates having a thickness of about 25 mm with flat plates and compressing the stack by 25% of the original thickness, of preferably from 10 to 300 kPa, more preferably from 30 to 200 kPa. When the polyolefin foam substrate has a compressive hardness of 10 kPa or more, the double-sided pressure-sensitive adhesive sheet has improved removability. On the other hand, when the polyolefin foam substrate has a compressive hardness of 300 kPa or less, the double-sided pressure-sensitive adhesive sheet has improved followability to uneven surfaces. The above compressive hardness of the polyolefin foam substrate is measured according to JIS K 6767.

The compressive hardness of the polyolefin foam substrate can be controlled, for example, by the degree of crosslinking or expansion ratio.

Although not particularly limited, the polyolefin foam substrate has a compression set (which may hereinafter be called "compression set (23°C, 50%RH)") of preferably 10% or less, as measured under environmental conditions: 23°C and 50%RH, under compression conditions: compressed to 50% of the original thickness, and at a compression time: one day (24 hours). The polyolefin foam substrate having a compression set (23°C, 50%RH) of 10% or less shows improved compression recovery and has improved conformity to uneven surfaces.

Although not particularly limited, the polyolefin foam substrate has a compression set (which may hereinafter be called "compression set (85°C, 90%RH)") of preferably 50% or less, as measured under environmental conditions: 85°C and 90%RH, under compression conditions: compressed to 50% of the original thickness, and at a compression time: one day (24 hours). The polyolefin foam substrate having a compression set (85°C, 90%RH) of 50% or less shows improved compression recovery and has improved followability to uneven surfaces.

Although not particularly limited, the polyolefin foam substrate has a compression set (which may hereinafter be called "compression set (-40°C)") of preferably 10% or less, as measured under environmental conditions: -40°C, under compression conditions: compressed to 50% of the original thickness, and at a compression time: one day (24 hours). The polyolefin foam substrate having a compression set (-40°C) of 10% or less shows improved compression recovery and has improved followability to uneven surfaces. The above compression sets (compression set (23°C, 50%RH), compression set (85°C, 90%RH), and compression set (-40°C)) can be determined by measuring the thickness of the polyolefin foam substrate within one minute after completion of compression according to JIS K6767.

The compression set of the polyolefin foam substrate can be controlled, for example, by the expansion ratio or composition.

The polyolefin foam substrate may be colored so as to allow the double-sided pressure-sensitive adhesive sheet of the present invention to develop graphical design functions or optical characteristics (such as light shielding property and light reflecting property).

For example, when the double-sided pressure-sensitive adhesive sheet of the present invention is used for light shielding purpose, the polyolefin foam substrate has, although not particularly limited, a visible light transmittance of preferably 15% or less (for example, from 0 to 15%), more preferably 10% or less (for example, from 0 to 10%) similar to the visible light transmittance of the double-sided pressure-sensitive adhesive sheet which will be described later.

For the coloring of the polyolefin foam substrate, colorants may be used. The colorants may be used either alone or in combination of two or more thereof.

When the double-sided pressure-sensitive adhesive sheet of the present invention is used for light shielding purposes, the polyolefin foam substrate is colored preferably black. When the substrate is colored black, the L* (lightness) specified in the L*a*b* color system is preferably 35 or less (for example, from 0 to 35), more preferably 30 or less (for example, from 0 to 30). The a* and b* specified in the L*a*b* color system can each be selected as needed, depending on the value of L*. Although not particular limited, the a* and b* each fall within a range of preferably from -10 to 10 (more preferably -5 to 5, and still more preferably -2.5 to 2.5), particularly preferably 0 or approximately 0.

The L*, a*, and b* specified in the L*a*b* color system can be determined herein through the measurement with a colorimeter (trade name "CR-200", manufactured by Konica Minolta Sensing Inc.; colorimeter). The L*a*b* color system is a color space recommended by The International Commission on Illumination (CIE) in 1976 and it means a color space called CIE 1976 (L*a*b*) color system. In Japanese Industrial Standards, the L*a*b* color system is specified in JIS Z 8729.

Examples of black colorants to be used for coloring the polyolefin foam substrate black include carbon blacks (such as furnace black, channel black, acetylene black, thermal black, and lampblack), graphite, copper oxide, manganese dioxide, aniline black, perylene black, titanium black, cyanine black, activated carbon, ferrites (such as non-magnetic ferrite and magnetic ferrite), magnetite, chromium oxide, iron oxide, molybdenum disulfide, chromium complexes, complex oxide-based black colorants, and anthraquinone-based organic black colorants. Of these, carbon blacks are preferred from the standpoint of cost and availability.

The using amount of the black colorant is not particularly limited and may be such an amount as to allow the double-sided pressure-sensitive adhesive sheet of the present invention to have desired optical characteristics.

When the double-sided pressure-sensitive adhesive sheet is used for light reflecting purposes, the polyolefin foam substrate is preferably colored white. When the polyolefin foam substrate is colored white, L* (lightness) defined in the L*a*b* color system is preferably 87 or more (for example, from 87 to 100), and more preferably 90 or more (for example, from 90 to 100). The a* and b* specified in the L*a*b* color system each can be selected as needed according to the value of L*. The a* and b* each are preferably in a range of from -10 to 10 (more preferably, from -5 to 5, and still more preferably from -2.5 to 2.5), and particularly preferably are 0 or approximately 0.

Examples of the white colorant to be used for coloring the polyolefin foam substrate white include inorganic white colorants such as titanium oxides (titanium dioxides such as rutile titanium dioxide and anatase titanium dioxide), zinc oxide, aluminum oxide, silicon oxide, zirconium oxide, magnesium oxide, calcium oxide, tin oxide, barium oxide, cesium oxide, yttrium oxide, magnesium carbonate, calcium carbonate (e.g., precipitated calcium carbonate and heavy calcium carbonate), barium carbonate, zinc carbonate, aluminum hydroxide, calcium hydroxide, magnesium hydroxide, zinc hydroxide, aluminum silicate, magnesium silicate, calcium silicate, barium sulfate, calcium sulfate, barium stearate, zinc white, zinc sulfide, talc, silica, alumina, clay, kaolin, titanium phosphate, mica, gypsum, white carbon, diatomaceous earth, bentonite, lithopone, zeolites, sericite, and hydrated halloysite; and organic white colorants such as acrylic resin particles, polystyrene resin particles, polyurethane resin particles, amide resin particles, polycarbonate resin particles, silicone resin particles, urea-formalin resin particles, and melamine resin particles.

The using amount of the white colorant is not particularly limited and may be such an amount as to allow the double-sided pressure-sensitive adhesive sheet of the present invention to have desired optical characteristics.

[Acrylic pressure-sensitive adhesive layer]

The acrylic pressure-sensitive adhesive layer in the double-sided pressure-sensitive adhesive sheet of the present invention is a pressure-sensitive adhesive layer formed from a pressure-sensitive adhesive composition (acrylic pressure-sensitive adhesive composition) containing at least an acrylic polymer and a tackifying resin. In short, the acrylic pressure-sensitive adhesive layer contains at least an acrylic polymer and a tackifying resin. Although the content of the acrylic polymer in the acrylic pressure-sensitive adhesive layer is not particularly limited, it is preferably from 40 to 98 wt%, and more preferably from 50 to 80 wt% based on the acrylic pressure-sensitive adhesive layer (100 wt%). The term "pressure-sensitive adhesive composition" as used herein also includes "composition for forming a pressure-sensitive adhesive layer".

(Acrylic polymer)

The acrylic polymer described above is a polymer (acrylic polymer) formed from a component including an alkyl (meth)acrylate having a linear or branched alkyl group as an essential monomer component. The term "(meth) acrylic" means "acrylic" and/or "methacrylic" (either one or both of "acrylic" and "methacrylic"), which will similarly apply hereinafter.
As the alkyl (meth)acrylate having a linear or branched alkyl group (hereinafter, simply referred to as "alkyl (meth)acrylate in some cases) which forms the  acrylic polymer, examples thereof include alkyl (meth)acrylate having 1 to 20 carbon atoms, such as methyl (meth)acrylate, ethyl (meth)acrylate, propyl (meth)acrylate, isopropyl (meth) acrylate, butyl (meth)acrylate (n-butyl (meth)acrylate, isobutyl (meth)acrylate, s-butyl (meth)acrylate, t-butyl (meth)acrylate), pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. The alkyl (meth)acrylate may be used either alone or in combination of two or more thereof. Among them, alkyl (meth)acrylate having 1 to 14 carbon atoms is preferable, alkyl (meth)acrylate having 1 to 10 carbon atoms is more preferable, alkyl (meth)acrylate having 4 to 9 carbon atoms are further more preferable, and 2-ethylhexyl acrylate and/or butyl acrylate is further more preferable. From the standpoint of the adhesive property and removability, butyl acrylate (BA) is still further more preferable.
The content of the alkyl (meth)acrylate (in particular, butyl acrylate) is not particularly limited, and is preferably 60 wt% or more (for example, 60 to 99 wt%), and more preferably 80 wt% or more (for example 80 to 95 wt%) based on the total amount (100 wt%) of monomer components forming the acrylic polymer. When both of alkyl acrylate and alkyl methacrylate are included as the alkyl (meth)acrylate, the "content of alkyl (meth)acrylate" means the total amount of the alkyl acrylate and alkyl methacrylate.
The monomer components forming the acrylic polymer is not particularly limited, and the following polar group-containing monomer is preferably included in addition to the alkyl (meth)acrylate. When the polar group-containing monomer is included, for example, the adhesive force to an adherend can be enhanced, and the cohesive force of the acrylic pressure-sensitive adhesive layer can be enhanced.
Examples of the polar group-containing monomer include carboxyl group-containing monomers (also including acid anhydride group-containing monomers such as maleic anhydride and itaconic anhydride) such as (meth)acrylic acid, itaconic acid, maleic acid, fumaric acid, crotonic acid, and isocrotonic acid; hydroxyl group-containing monomers such as 2-hydroxyethyl (meth)acrylate, 3-hydroxypropyl (meth)acrylate, 4-hydroxybutyl (meth)acrylate, 6-hydroxyhexyl (meth)acrylate, vinyl alcohol and allyl alcohol; amide group-containing monomers such as (meth)acrylamide, N,N-dimethyl (meth) acrylamide, N-methylol (meth) acrylamide, N-methoxymethyl (meth) acrylamide, N-butoxymethyl (meth) acrylamide and N-hydroxyethyl (meth)acrylamide; amino group-containing monomers such as aminoethyl (meth)acrylate, dimethylaminoethyl (meth)acrylate and t-butylaminoethyl (meth)acrylate; epoxy group-containing monomers such as glycidyl (meth)acrylate and methylglycidyl (meth)acrylate; cyano group-containing monomers such as acrylonitrile and methacrylonitrile; hetero ring-containing vinyl monomers such as N-vinyl-2-pyrrolidone and (meth)acryloyl morpholine, vinylpyridine, N-vinylpiperidone, vinylpyrimidine, N-vinylpiperazine, N-vinylpyrrole, N-vinylimidazole, and vinyloxazole; sulfonic acid group-containing monomers such as sodium vinylsulfonate; phosphoric acid group-containing monomers such as 2-hydroxyethyl acryloyl phosphate; imide group-containing monomers such as cyclohexyl maleimide and isopropyl maleimide; and isocyanate group-containing monomers such as 2-methacryloyloxyethyl isocyanate; and the like. The polar group-containing monomer may be used either alone or in combination of two or more thereof. Among them, as the polar group-containing monomer, from the standpoint of improving the adhesive force to an adherend, the carboxyl group-containing monomer and hydroxyl group-containing monomer are preferable, and the carboxyl group-containing monomer is more preferable, and acrylic acid (AA) is further more preferable.

The content of the polar group-containing monomer is not particularly limited, and is preferably 30 wt% or less (for example, 0.1 to 30 wt%), and more preferably 0.1 to 15 wt% based on the total amount (100 wt%) of the monomer components forming the acrylic polymer. When the content is 0.1 wt% or more, there is a tendency that the cohesive force of the acrylic pressure-sensitive adhesive layer is increased to improve the shear force, and thus, the removability is improved. On the other hand, when the content is 30 wt% or less, there is a tendency that the cohesive force of the acrylic pressure-sensitive adhesive layer is not excessively increased, and thus, the impact resistance is improved. In addition, the adhesive property tends to be improved.

Among the polar group-containing monomer, the content of the carboxyl group-containing monomer (in particular, acrylic acid) is not particularly limited, and is preferably 1 to 5 wt%, more preferably 1 to 3 wt%, and further more preferably 1 to 2 wt% based on the total amount (100 wt%) of monomer components forming the acrlic polymer, from the standpoint of the adhesive property to non-polarity adherend such as polypropylene.

As the monomer components forming the acrylic polymer, a polyfunctional monomer may be included in addition to the alkyl (meth)acrylate and polar group-containing monomer. The polyfunctional monomer is a monomer having two or more ethylenically unsaturated groups. The ethylenically unsaturated group is not particularly limited, but examples thereof include a radical polymerizable functional group such as a vinyl group, a propenyl group, an isopropenyl group, vinyl ether group (vinyloxy group) and an allyl ether group (allyloxy group), and the like.

Examples of the polyfunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate and the like. The polyfunctional group may be used either alone or in combination of two or more thereof.

The content of the polyfunctional monomer is not particularly limited, and is preferably 2 wt% or less (for example, 0 to 2 wt%), and more preferably 0.02 to 1 wt% based on the total amount (100 wt%) of monomer components forming the acrylic polymer. When the content is 2 wt% or less, there is a tendency that the cohesive force of the acrylic pressure-sensitive adhesive layer is not excessively increased, and the impact resistance and adhesive property are improved. When a crosslinking agent is used, the polyfunctional monomer may not be used. When a crosslinking agent is not used, the content of the polyfunctional monomer is preferably 0.001 to 0.5 wt%, and more preferably 0.002 to 0.1 wt%.

As the monomer components forming the acrylic polymer, polymerizable (copolymerizable) monomers (hereinafter, referred to as "other copolymerizable monomer" in some cases) other than the above alkyl (meth)acrylate, polar group-containing monomer and polyfunctional monomer may be included.

Examples of the other copolymerizable monomers include (meth)acrylic acid esters other than the above-described alkyl (meth)acrylates, polar-group-containing monomers, and polyfunctional monomers, such as(meth)acrylic acid esters having an alicyclic hydrocarbon group [for example, cyclopentyl (meth)acrylate, cyclohexyl (meth)acrylate, and isobornyl (meth)acrylate], (meth)acrylic acid esters having an aromatic hydrocarbon group [for example, phenyl (meth)acrylate, phenoxyethyl (meth)acrylate, and benzyl (meth)acrylate], alkoxyalkyl (meth)acrylates [for example, , 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, and 4-ethoxybutyl (meth)acrylate]; vinyl esters [for example, vinyl acetate and vinyl propionate]; aromatic vinyl compounds [for example, styrene and vinyltoluene]; olefins or dienes [for example, ethylene, butadiene, isoprene, and isobutylene]; vinyl ethers [for example, vinyl alkyl ethers]; and vinyl chloride.

The acrylic polymer may be manufactured by polymerizing the monomer components using a known/general polymerization method. As the polymerization of the acrylic polymer, examples thereof include a solution polymerization, an emulsion polymerization, a bulk polymerization, a polymerization by an active energy-ray irradiation (active energy-ray polymerization) or the like. Among them, from the standpoint of the pressure-sensitive adhesive property, the solution polymerization and the active energy-ray polymerization are preferable, and from the standpoint of allowing to select various kinds of tackifying resins, the solution polymerization is more preferable.

In the solution polymerization of the acrylic polymer, various kinds of general solvents may be used. As the solvents, examples thereof include organic solvents, such as esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methylethylketone and methylisobutylketone. The solvents may be used either alone or in combination of two or more thereof.

In the polymerization of the acrylic polymer, a polymerization initiator may be used. Such a polymerization initiator is not particularly limited and may be properly selected from known/general initiators and used. As the polymerization initiator, examples thereof include an oil-soluble polymerization initiator, such as an azo-based polymerization initiator such as 2,2'-azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl-2,2'-azobis(2-methylpropionate) and 4,4'-azobis-4-cyanovalerianate; and a peroxide-based polymerization initiator such as benzoylperoxide, t-butylhydroperoxide, di-t-butylperoxide, t-butylperoxybenzoate, dicumylperoxide, 1,1-bis(t-butylperoxy)-3,3,5-trimethylcyclohexane and 1,1-bis(t-butylperoxy)cyclododecane. The polymerization initiator may be used either alone or in combination of two or more thereof. The used amount of the polymerization initiator is not particularly limited, and may be used within a range available as a polymerization initiator in the related art.

The process for preparing the acrylic polymer is preferably a process including a step of polymerizing monomer components forming the acrylic polymer in an organic solvent in the presence of a polymerization initiator, in which, of a primary reaction to be conducted in the former stage of polymerization and an aging reaction to be conducted in the latter stage of polymerization, the aging reaction in the latter stage of polymerization is preferably conducted twice or more at respective different temperatures. Using such a process for preparation of the acrylic polymer facilitates control of the weight-average molecular weight and degree of dispersion (Mw/Mn) of  the acrylic polymer, and the ratio of components having a molecular weight of 100,000 or less in the acrylic polymer to predetermined ranges which will be described later, making it possible to provide an acrylic pressure-sensitive adhesive layer having an improved anchoring property to the polyolefin foam substrate and, as a result, removability of the double-sided pressure-sensitive adhesive sheet can be improved.

The above preparation process of the acrylic polymer has a primary reaction in the former stage of polymerization and an aging reaction in the latter stage of polymerization. When the aging reaction in the latter stage of polymerization is conducted twice or more at respective different temperatures, the temperature of the aging reaction (aging temperature) is preferably higher than the temperature of the primary reaction (primary reaction temperature) and the temperature of the second aging reaction is preferably higher than that of the first aging reaction. Moreover, it is preferred that the temperature of the first aging reaction is higher by at least 5°C than the primary reaction temperature, and the temperature of the second aging reaction is higher by 5°C or more than that of the first aging reaction.

From the standpoint of suppressing production of low-molecular weight components in the initial stage of polymerization, the primary reaction is conducted particularly preferably at the temperature (primary reaction temperature) shown below.

(10-hour half-life temperature of polymerization initiator - 11) [°C] ≤ primary reaction temperature [°C] ≤ (10-hour half-life temperature of polymerization initiator - 3) [°C]

The term "primary reaction" as used herein means a reaction until the rate of polymerization becomes 80% or more, preferably 85% or more, more preferably 90% or more after the polymerization is started. By controlling the rate of polymerization upon completion of the primary reaction to 80% or more, the amount of a residual monomer to be polymerized in the aging reaction conducted at a temperature higher than the primary reaction temperature decreases and the amount of the low-molecular weight component is reduced, leading to improvement in heat resistance or repulsion resistance. The rate of polymerization is measured in the following manner.

(Measurement method of rate of polymerization)

About 1 g of a solution containing an acrylic polymer is accurately weighed. After drying at 130°C for 3 hours by using a dryer, it is weigthed again. The rate of polymerization is calculated, according to the below-described equation, from a measured solid content (%) determined by dividing the dry weight by the weight of the solution [= (weight after drying)/(weight before drying)] and a calculated solid content (%) determined from the charged ratio before polymerization.

$$\text{Rate of polymerization (\%)} = (\text{measured solid content (\%)})/(\text{calculated solid content (\%)}) \times 100$$

The term " 10-hour half-life temperature" of the polymerization initiator means the temperature at which it takes 10 hours for a polymerization initiator in benzene to decompose and decreases by half. It is an indicator showing a thermal characteristic of the polymerization initiator. When two or more polymerization initiators are used, the 10-hour half-life temperature of a polymerization initiator whose added amount (parts by weight) is greatest among the polymerization initiators is defined herein as the "10-hour half-life temperature". When there are two or more polymerization initiators whose added amount (parts by weight) is greatest among the polymerization initiators, the 10-hour half-life temperature of a polymerization initiator having the highest 10-hour half-life temperature among them is defined herein as the "10-hour half-life temperature".

For example, the polymerization initiators described above have 10-hour half-life temperature as follows.
2,2'-Azobisisobutyronitrile: 65°C
2,2'-Azobis(2-methylbutyronitrile): 67°C
Dimethyl-2,2'-azobis(2-methylpropionate): 67°C

4,4'-Azobis-4-cyanovaleric acid: 68°C

Benzoyl peroxide: 74°C

The preparation process of the acrylic polymer described above includes a primary reaction in the former stage of polymerization and an aging reaction in the latter stage of polymerization. The aging reaction in the latter stage of polymerization is conducted twice or more at respective different temperatures. First, the primary reaction is conducted. After completion of the primary reaction, temperature is increased, and then, a first aging reaction is conducted at a constant temperature,. The temperature is then increased further, and then, a second aging reaction is conducted at a constant temperature. In each aging reaction, the temperature is kept constant preferably for one hour or more. By keeping the temperature constant in each aging reaction for one hour or more and conducting aging reactions twice (two stages) or more separately from each other, the degree of dispersion of the acrylic polymer can be easily controlled within a range described below, and the amount of a residual monomer can be decreased.

In addition, it is preferred that, in the polymerization initiator, the following relationship among 10-hour half-life temperature, primary reaction temperature, and second aging temperature are satisfied.

(a) {(10-hour half-life temperature of polymerization initiator) - 11} [C] ≤ (primary reaction temperature) [°C] ≤ {(10-hour half-life temperature of polymerization initiator) - 3} [°C]

(b) {(10-hour half-life temperature of polymerization initiator) - 2} [°C] ≤ (first aging temperature) [°C] ≤ {(10-hour half-life temperature of polymerization initiator) + 4} [°C]

(c) {(10-hour half-life temperature of polymerization initiator) + 5} [°C] ≤ (second aging temperature) [°C] ≤ {(10-hour half-life temperature of polymerization initiator) + 9} [°C]

The following is more preferable relationship between the primary reaction temperature and the aging temperature.

(a) {(10-hour half-life temperature of polymerization initiator) -11} [°C] ≤ (primary reaction temperature) [°C] ≤ {(10-hour half-life temperature of polymerization initiator) - 1} [°C]

(b) {(10-hour half-life temperature of polymerization initiator) - 2} [°C] ≤ (first aging temperature) [°C] ≤ {(10-hour half-life temperature of polymerization initiator) + 2} [°C]

(c) {(10-hour half-life temperature of polymerization initiator) + 5} [°C] ≤ (second aging temperature) [°C] ≤{(10-hour half-life temperature of polymerization initiator) + 9} [°C]

The primary reaction is conducted preferably for at 4 hours or more at the temperature shown in the above inequations. When the aging reaction is conducted three times (three stages) or more, for example, the first aging reaction may be conducted at two or more respective different temperatures within the temperature range of the inequation (b) or the second aging reaction may be conducted at two or more respectively different temperatures within the temperature range of the formula (c).

By conducting the primary reaction at {(10-hour half-life temperature of polymerization initiator) -11} [°C] or more (main reaction temperature), the resulting acrylic polymer does not have an excessively increased weight average molecular weight, and therefore the initial pressure-sensitive adhesive force is improved. On the other hand, by conducting the primary reaction at {(10-hour half-life temperature of polymerization initiator) - 3} [°C] or less (main reaction temperature), the resulting acrylic polymer does not have an excessively decreased weight average molecular weight, and therefore heat resistance is improved.

By setting the first aging temperature at {(10-hour half-life temperature of polymerization initiator) - 2} [°C] or more to increase a difference from the main reaction temperature, it is possible to reduce the amount of a residual monomer. On the other hand, by setting the first aging temperature at {(10-hour half-life temperature of polymerization initiator) +4} [°C] or less, it is possible to prevent excessive production of low-molecular weight components and thereby improve heat resistance.

In the end, in order to produce a predetermined amount of low-molecular weight components, it is preferred to set the second aging temperature at {(10-hour half-life temperature of polymerization initiator) +5} [°C] or more. By setting the second aging temperature at {(10-hour half-life temperature of polymerization initiator) + 5} [°C] or more, it is possible to increase the rate of polymerization and moreover, produce a certain amount of low-molecular weight components, which facilitates control of the degree of dispersion of the acrylic polymer within a range described below. On the other hand, by setting the second aging reaction at {(10-hour half-life temperature of polymerization initiator) + 9} [°C] or less, it is possible to prevent excessive production of low-molecular weigth components at once and therefore provide an acrylic pressure-sensitive adhesive layer having improved heat resistance. The aging reaction is thus conducted at least twice (two stages) at respective different temperatures in order to control the production of low-molecular weigth components.

Although the weight average molecular weight of the acrylic polymer is not particularly limited, it is preferably from 300,000 to 1,000,000, more preferably from 300,000 to 800,000, and still more preferably from 400,000 to 700,000. When the acrylic polymer has a weight average molecular weight of 300,000 or more, the resulting acrylic polymer is likely to have improved cohesive force. On the other hand, when the acrylic polymer has a weight average molecular weight of 1,000,000 or less, the resulting acrylic polymer is likely to have improved initial pressure-sensitive adhesive force.

Although the degree of dispersion (polydegree of dispersion; [(weight average molecular weight)/(number average molecular weight)], Mw/Mn of the acrylic polymer is not particularly limited, it is preferably from 3 to 10, more preferably from 4 to 8, and still more preferably from 5 to 7. When the acrylic polymer has a degree of dispersion of 3 or more to allow presence of a certain amount of (adequate amount of) low-molecular weight components, it has improved initial pressure-sensitive adhesive force. An acrylic pressure-sensitive adhesive layer using the resulting acrylic polymer has an improved anchoring property to the polyolefin foam substrate, resulting in improvement in removability. On the other hand, a double-sided pressure-sensitive adhesive sheet using the acrylic polymer having a degree of dispersion of 10 or less has improved heat resistance and improved removability. The term "degree of dispersion" is expressed by a ratio of the weight average molecular weight to the number average molecular weight [= (weight average molecular weight)/(number average molecular weight)] and it provides an indication of the molecular weight distribution of the acrylic polymer.

Although the ratio (content) of components having a molecular weight of 100,000 or less in the acrylic polymer is not particularly limited, it is preferably from 10 to 30 wt%, more preferably from 15 to 30 wt%, and still more preferably from 20 to 30 wt%, each based on the acrylic polymer (100 wt%). When the ratio of the components having a molecular weight of 100,000 or less is 10 wt% or more, thereby allowing the presence of a certain amount of (an adequate amount of) low-molecular weigth components, the acrylic pressure-sensitive adhesive layer polymer has improved initial pressure-sensitive adhesive force. An acrylic pressure-sensitive adhesive layer using the resulting acrylic polymer has an improved anchoring property to the polyolefin foam substrate, resulting in improvement in removability. On the other hand, a double-sided pressure-sensitive adhesive sheet using the acrylic polymer containing components having a molecular weight of 100,000 or less at a ratio of 30 wt% or less has improved heat resistance and improved removability.

In the above acrylic polymer, the weight-average molecular weight, degree of dispersion [(weight average molecular weight)/(number average molecular weight)], and a ratio of components having a molecular weight of 100,000 or less can be determined by measuring the molecular weight, in terms of standard polystyrene, of the acrylic polymer by gel permeation chromatography method (GPC method). The molecular weight can be measured, for example, using the following apparatus under following conditions.

Apparatus: HLC8210 GPC (manufactured by TOSOH CORPORATION)
Column: TSK gel super HM-H/H4000/H3000/H2000 having 6.0 mm I.D. x 150 mm
Eluent: tetrahydrofuran (THF)
Flow rate: 0.6 mL/min
Column temperature: 40°C
Injection volume: 20 $\mu$l
Detector: refractometer (RI)
Measurement sample: obtained by dissolving the acrylic polymer in THF to prepare a solution having an acrylic polymer concentration of 0.1 wt% and removing dusts from the solution by filtration through a filter.

(Tackifying resin)

As described above, the pressure-sensitive adhesive composition forming the acrylic pressure-sensitive adhesive layer of the double-sided pressure-sensitive adhesive sheet of the present invention contains at least a tackifying resin (tackifier). The double-sided pressure-sensitive adhesive sheet of the present invention containing a tackifying resin exhibits high adhesion.

The tackifying resin is not particularly limited, and examples thereof include terpene based tackifying resins, phenol based tackifying resins, rosin based tackifying resins and petroleum based tackifying resins. The tackifying resin may be used either alone or in combination of two or more kinds thereof.

Examples of the terpene-based tackifying resin include a terpene-base resin such as α-pinene polymer, β-pinene polymer and dipentene polymer, and a modified terpene-based resin (e.g., terpene phenolic resin, styrene-modified terpene-based resin, aromatic-modified terpene-based resin, hydrogenated terpene-based resin) obtained by modifying (for example, phenol modification, aromatic modification, hydrogenation modification or hydrocarbon modification) the terpene-based resin above.

Examples of the phenolic tackifying resin include a condensate (e.g., alkylphenolic resin, or xylene formaldehyde-based resin) of various phenols (e.g., phenol, m-cresol, 3,5-xylenol, p-alkylphenol, or resorcin) with formaldehyde, a resol obtained by addition-reacting the phenols above with formaldehyde in the presence of an alkali catalyst, a novolak obtained by condensation-reacting the phenols above with formaldehyde in the presence of an acid catalyst, and a rosin-modified phenol resin obtained by adding and thermally polymerizing phenol and rosins (for example, an unmodified rosin, a modified rosin or various rosin derivatives) in the presence of an acid catalyst.

Examples of the rosin-based tackifying resin include an unmodified rosin (natural rosin) such as gum rosin, wood rosin and tall oil rosin, a modified rosin (e.g., hydrogenated rosin, disproportionated rosin, polymerized rosin, or other chemically modified rosins) obtained by modifying the unmodified rosin above through hydrogenation, disproportionation, polymerization or the like, and various rosin derivatives. Examples of the rosin derivative include rosin esters, for example, a rosin ester compound obtained by esterifying an unmodified rosin with alcohols, and a modified rosin ester compound obtained by esterifying a modified rosin (e.g., hydrogenated rosin, disproportionated rosin, or polymerized rosin) with alcohols; unsaturated fatty acid-modified rosins obtained by modifying an unmodified rosin or a modified rosin (e.g., hydrogenated rosin, disproportionated rosin, or polymerized rosin) with an unsaturated fatty acid; unsaturated fatty acid-modified rosin esters obtained by modifying rosin esters with an unsaturated fatty acid; rosin alcohols obtained by reducing the carboxyl group in unmodified rosins, modified rosins (e.g., hydrogenated rosin, disproportionated rosin, or polymerized rosin), unsaturated fatty acid-modified rosins or unsaturated fatty acid-modified rosin esters; and metal salts of rosins (particularly, rosin esters) such as unmodified rosin, modified rosin and various rosin derivatives.

Examples of the petroleum-based tackifying resin include a known petroleum resin such as aromatic petroleum resin, aliphatic petroleum resin, alicyclic petroleum resin (aliphatic cyclic petroleum resin), aliphatic aromatic petroleum resin, aliphatic alicyclic petroleum resin, hydrogenated petroleum resin, coumarone-based resin and coumarone-indene-based resin. More specifically, examples of the aromatic petroleum resin include a polymer using only one species or two or more species of vinyl group-containing aromatic hydrocarbons having a carbon number of 8 to 10 (e.g., styrene, o-vinyltoluene, m-vinyltoluene, p-vinyltoluene, $\alpha$-methylstyrene, $\beta$-methylstyrene, indene, and methylindene). As the aromatic petroleum resin, an aromatic petroleum resin (so-called "C9 petroleum resin") obtained from a fraction (so-called "C9 petroleum fraction") such as vinyl toluene and indene is preferable. Examples of the aliphatic petroleum resin include a polymer using only one species or two or more species of olefins or dienes having a carbon number of 4 to 5 (for example, an olefin such as butene-1, isobutylene and pentene-1; and a diene such as butadiene, piperylene (1,3-pentadiene) and isoprene). As the aliphatic petroleum resin, an aliphatic petroleum resin (so-called "C4 petroleum resin" or "C5 petroleum resin") obtained from a fraction (so-called "C4 petroleum fraction" or "C5 petroleum fraction") such as butadiene, piperylene and isoprene is preferable. Examples of the alicyclic petroleum resin include an alicyclic hydrocarbon-based resin obtained by cyclizing and dimerizing the aliphatic petroleum resin (so-called "C4 petroleum resin" or "C5 petroleum resin") and then polymerizing the dimer, a polymer of cyclic diene compound (e.g., cyclopentadiene, dicyclopentadiene, ethylidene norbornene, dipentene, ethylidene bicycloheptene, vinylcycloheptene, tetrahydroindene, vinylcyclohexene, or limonene), a hydrogenation product thereof, and an alicyclic hydrocarbon-based resin obtained by hydrogenating the aromatic ring in the above-described aromatic hydrocarbon resin or the aliphatic·aromatic petroleum resin described below. Examples of the aliphatic·aromatic petroleum resin include a styrene-olefin-based copolymer. As the aliphatic·aromatic petroleum resin, a so-called "C5/C9 copolymer petroleum resin" or the like may be used.

The tackifying resin may be a commercial product and, for example, trade name "SUMILITERESIN PR-12603" (manufactured by Sumitomo Bakelite Co., Ltd.) and trade name "PENSEL D125" (manufactured by Arakawa Chemical Industries, Ltd.) may be used.

Among the tackifying resins described above, rosin-based tackifying resins are preferred because they can satisfy both tackiness and removability at a higher level. Polymerized rosin esters (esterified compounds of a polymerized rosin obtained by esterifying a polymerized rosin with an alcohol) are particularly preferred.

As the tackifying resin, a tackifying resin having a softening point of from 80 to 180°C is preferred and a tackifying resin having a softening point of from 85 to 160°C is more preferred, from the standpoint of satisfying both tackiness and removability at a higher level. Particularly, a tackifying resin having a softening point less than 150°C (for example, within a range exceeding 90°C but less than 150°C) is preferred. This means that a polymerized rosin ester having a softening point exceeding 90°C but less than 150°C is particularly preferred as the tackifying resin. The softening point of the tackifying resin is defined as a value measured using a ring and ball method (for example, the ring and ball method specified in JIS K5902).

Although the content of the tackifying resin in the pressure-sensitive adhesive composition forming the acrylic pressure-sensitive adhesive layer of the double-sided pressure-sensitive adhesive sheet of the present invention is not particularly limited, it is preferably from 5 to 60 parts by weight, more preferably from 10 to 50 parts by weight, and still more preferably from 20 to 40 parts by weight, each based on 100 parts by weight of the acrylic polymer. When the content is set to 5 parts by weight or more, the removability is improved. Although the reason of the improvement in the removability has not been elucidated, it is presumed by the present inventors that an increase in the content of the tackifying resin moderately reduces compatibility between an acrylic polymer having a specific composition (particularly, an acrylic polymer formed from a component including a specific amount of butyl acrylate or acrylic acid as an essential monomer component) and the tackifying resin, thereby suppressing a time-dependent increase in the pressure-sensitive adhesive force to an adherend. On the other hand, when the content is set to 60 parts by weight or less, the acrylic pressures-sensitive adhesive layer does not become too hard and has improved adhesion.

In the pressure-sensitive adhesive composition, in addition to the acrylic polymer and tackifying resin, if necessary, known additives such as a crosslinking agent, a crosslinking accelerator, a silane coupling agent, an antiaging agent, a filler, a colorant (dye or pigment), a UV absorbing agent, an antioxidant, a chain-transfer agent, a plasticizer, a softener, a surfactant and an antistatic agent may be contained as long as the property of the present invention is not impaired. When the acrylic pressure-sensitive adhesive layer is formed, various general solvents may be used. The kind of the solvent is not particularly limited, and examples thereof include any solvents used in the solution polymerization method as described above.

When the pressure-sensitive adhesive composition contains a crosslinking agent, the acrylic pressure-sensitive adhesive layer has improved cohesive force as a result of crosslinking of the acrylic polymer, and the acrylic pressure-sensitive adhesive layer has an enhanced anchoring property to the polyolefin foam substrate. As a result, the resulting double-sided pressure-sensitive adhesive sheet has improved removability. The crosslinking agent is a polyfunctional compound, that is, a compound having two or more functional groups, and is capable of forming a crosslinked structure, by reacting with a functional group which the acrylic polymer has.

The crosslinking agent is not particularly limited, and examples thereof include an isocyanate-based crosslinking agent, an epoxy-based crosslinking agent, a melamine-based crosslinking agent, a peroxide-based crosslinking agent, an urea-based crosslinking agent, a metal alkoxide-based crosslinking agent, a metal chelate-based crosslinking agent, a metal salt-based crosslinking agent, a carbodiimide-based crosslinking agent, an oxazoline-based crosslinking agent, an aziridine-based crosslinking agent, an amine-based crosslinking agent and the like. The crosslinking agent may be used either alone or in combination of two or more thereof. Among them, the isocyanate-based crosslinking agent (polyfunctional isocyanate compound) is preferable from the standpoint of the improvement of cohesive force of the acrylic pressure-sensitive adhesive layer and improvement of anchoring property to the polyolefine foam substrate.

The isocyanate-based crosslinking agent (polyfunctional isocyanate compound) is not particularly limited, and examples thereof include lower aliphatic polyisocyanates such as 1, 2-ethylene diisocyanate, 1,4-butylenediisocyanate and 1,6-hexamethylene diisocyanate; alicyclic polyisocyanates such as cyclopentylene diisocyanate, cyclohexylene diisocyanate, isophorone diisocyanate, hydrogenated tolylene diisocyanate and hydrogenated xylene diisocyanate; and aromatic polyisocyanates such as 2,4-tolylene diisocyanate, 2,6-tolylene diisocyanate, 4,4'-diphenylmethane diisocyanate and xylylene diisocyanate. The isocyanate-based crosslinking agent may be, for example, commercially available products such as a trimethylolpropane/tolylene diisocyanate adduct (manufactured by Nippon Polyurethane Industry Co., Ltd., trade name "CORONATE L"), a trimethylolpropane/hexamethylene diisocyanate adduct (manufactured by Nippon Polyurethane Industry Co., Ltd., trade name "CORONATE HL"), a trimethylolpropane/xylylene diisocyanate adduct (manufactured by Mitsui Chemicals Co., Ltd., trade name "TAKENATE 110N").

Although the content of the crosslinking agent is not particularly limited, it is preferably from 0.001 to 10 parts by weight, more preferably from 0.01 to 7 parts by weight, and still more preferably from 0.1 to 5 parts by weight, particularly preferably from 0.5 to 3 parts by weight, based on 100 parts by weight of the acrylic polymer, from the standpoint of adhesion, removability, and impact resistance. When the content of the crosslinking agent is set to 0.001 part by weight or more, the resulting pressure-sensitive adhesive composition has improved cohesive force and removability. On the other hand, the content of the crosslinking agent is set to 10 parts by weight or less, the resulting pressure-sensitive adhesive composition has improved initial pressure-sensitive adhesive force, impact resistance, and repulsion resistance.

A process of preparing the pressure-sensitive adhesive composition is not particularly limited, examples thereof include a process of mixing the acrylic polymer, the tackifying resin, and the crosslinking agent described above, and if necessary, a solvent and the other additive(s).

The formation of the acrylic pressure-sensitive adhesive layer of the double-sided pressure-sensitive adhesive sheet of the present invention is not particularly limited, but the acrylic pressure-sensitive adhesive layer can be formed by coating (applying) the pressure-sensitive adhesive composition on a prescribed substrate (for example, separator, polyolefin foam substrate or the like), and if necessary, drying and/or curing the applied pressure-sensitive adhesive composition. In the coating (applying) of the pressure-sensitive adhesive composition, a known/general coating method can be used, and a general coater (a gravure roll coater, a reverse roll coater, a kiss roll coater, a dip roll coater, a bar coater, a knife coater, a spray coater, a comma coater, a direct coater or the like), can be used.

The acrylic pressure-sensitive adhesive layer is particularly preferably formed from a pressure-sensitive adhesive composition containing at least an acrylic polymer formed from monomer components containing 80 wt% or more of butyl acrylate and from 1 to 3 wt% of acrylic acid, based on the total amount of the monomer components forming the acrylic polymer, and from 10 to 30 parts by weight of a polymerized rosin ester, based on 100 parts by weight of the acrylic polymer. The acrylic pressure-sensitive adhesive layer using the above components in combination is preferred because in particular, it contributes to suppression of a time-dependent increase in pressure-sensitive adhesive force and improvement in removability. Such suppression of a time-dependent increase in pressure-sensitive adhesive force is presumed to be produced as an advantage by moderately decreasing the compatibility between the acrylic polymer and the tackifying resin. The acrylic pressure-sensitive adhesive layer in the double-sided pressure-sensitive adhesive sheet of the present invention is however not limited thereto.

Although the thickness of the acrylic pressure-sensitive adhesive layer is not particularly limited, it is preferably from 10 to 300 $\mu$m, more preferably from 10 to 250 $\mu$m, and still more preferably from 30 to 230 $\mu$m. The acrylic pressure-sensitive adhesive layer having a thickness of 10 $\mu$m or more contributes to improvement in adhesion and impact resistance. On the other hand, the acrylic pressure-sensitive adhesive layer having a thickness of 300 $\mu$m or less contributes to improvement in removability. In the double-sided pressure-sensitive adhesive sheet of the present invention, it is preferred that the respective thicknesses of the acrylic pressure-sensitive adhesive layers formed on both surfaces of the polyolefin foam substrate satisfy the above-described range. The respective thicknesses of the acrylic pressure-sensitive adhesive layers may be the same or different from each other. The acrylic pressure-sensitive adhesive layer may be a single layer or a stack of two or more layers (for example, two or more acrylic pressure-sensitive adhesive layers different in composition).

A gel fraction of the acrylic pressure-sensitive adhesive layer is not particularly limited, but is preferably 10 to 50 wt%, more preferably 15 to 45 wt%, and further more preferably 20 to 40 wt%. When the gel fraction thereof is 10 wt% or more, the cohesive failure of the acrylic pressure-sensitive adhesive layer is inhibited, thereby improving the removability. On the other hand, when the gel fraction thereof is 50 wt% or less, the initial pressure-sensitive adhesive force and impact resistance are improved.

The gel fraction of the acrylic pressure-sensitive adhesive layer can be measured as an insoluble matter in ethyl acetate, and in detail, as a weight fraction (unit: wt%) of an insoluble matter after the acrylic pressure-sensitive adhesive layer is immersed in ethyl acetate at 23°C for 7 days, with respect to the sample before immersing. Specifically, the gel fraction is a value calculated by "Method of measuring gel fraction" to be described below.

(Method of measuring gel fraction)

About 0. 1 g of the acrylic pressure-sensitive adhesive layer is sampled from the double-sided pressure-sensitive adhesive sheet of the present invention, wrapped with a porous tetrafluoroethylene sheet (trade name "NTF1122", manufactured by Nitto Denko Corporation) having an average pore size of 0.2 $\mu$m, and it is tied up with a kite string and at this time, it is measured for the weight, and the weight measured is designated as the weight before immersion. The weight before immersion is the total weight of the pressure-sensitive adhesive layer, the tetrafluoroethylene sheet and the kite string. The total weight of the tetrafluoroethylene sheet and the kite string is also measured, and this weight is designated as the wrapper weight.

Subsequently, the acrylic pressure-sensitive adhesive layer wrapped with a tetrafluoroethylene sheet and tied up with a kite string (hereinafter referred to as the "sample") is put in a 50 ml-volume vessel filled with ethyl acetate, followed by allowing to stand at 23°C for 7 days. The sample (after ethyl acetate treatment) is then taken out of the vessel, and it is transferred to an aluminum-made cup, followed by drying in a dryer at 130°C for 2 hours to remove ethyl acetate, and it is measured for the weight, and this weight is designated as the weight after immersion.

The gel fraction is calculated according to the following formula:

$$\text{Gel fraction (wt\%)} = ((C-D)/(E-D)) \times 100$$

(wherein C is the weight after immersion, D is the wrapper weight, and E is the weight before immersion).

The gel fraction of the acrylic pressure-sensitive adhesive layer can be controlled by, for example, a composition of a monomer composition forming the acrylic polymer, the content of the crosslinking agent, and the like.

The haze of the pressure-sensitive adhesive layer (in accordance with JIS K7136) is not particularly limited, but is preferably 3 to 30%, more preferably 5 to 20%, and further more preferably 5 to 15%. When the haze is 3% or more, there is a tendency that the time-dependent pressure-sensitive adhesive force to an adherend is inhibited, and the removability is improved. On the other hand, when the haze is 30% or less, good tackiness is achieved. The haze of the acrylic pressure-sensitive adhesive layer can be measured, for example, by laminating the acrylic pressure-sensitive adhesive layer to a slide glass (for example, total light transmittance of 91.8% and haze of 0.4%), and using a haze meter (manufactured by Murakami Color Research Laboratory Co., Ltd., trade name "HM-150") in accordance with JIS K 7136.

The haze of the acrylic pressure-sensitive adhesive layer can be controlled, for example, by the composition of the acrylic polymer, kind of the tackifying resin, the content of the tackifying resin, or the like.

It is preferred to control the haze of the acrylic pressure-sensitive adhesive layer within the above range from the standpoint of preventing an adhesive residue on an adherend. Moreover, controlling the compatibility of specific materials constituting the acrylic pressure-sensitive adhesive layer, thereby allowing the haze to satisfy the above range is markedly effective from the standpoint of satisfying both an adhesive-remaining property (adhesive-residue preventing property) and adhesion. Specifically, the compatibility of specific materials means compatibility between an acrylic polymer formed from monomer components containing 80 wt% or more (for example, from 80 to 95 wt%) of butyl acrylate, and a polymerized rosin ester, and compatibility between an acrylic polymer formed from monomer components containing from 1 to 5 wt% of acrylic acid, and a polymerized rosin ester. In the most preferred mode, the haze of an acrylic pressure-sensitive adhesive layer formed using a pressure-sensitive adhesive composition containing an acrylic polymer obtained by copolymerization of the specific amounts of butyl acrylate and acrylic acid and a polymerized rosin ester is controlled to fall within the above range. This makes it possible to improve the adhesive-remaining property with keeping adhesion, in short, to improve removability.

[Double-sided pressure-sensitive adhesive sheet]

The double-sided pressure-sensitive adhesive sheet of the present invention is a double-sided pressure-sensitive adhesive sheet including the polyolefin foam substrate and the acrylic pressure-sensitive adhesive layer on both surfaces of the polyolefin foam substrate. In the double-sided pressure-sensitive adhesive sheet of the present invention, each of the acrylic pressure-sensitive adhesive layers formed on both surfaces of the polyolefin foam substrate may have the same composition or different compositions. From the standpoint of productivity, the respective acrylic pressure-sensitive adhesive layers have preferably the same composition.

The double-sided pressure-sensitive adhesive sheet of the present invention may include, in addition to the polyolefin foam substrate and the acrylic pressure-sensitive adhesive layer, other layers (for example, an intermediate layer, an undercoated layer and the like) as long as the effects of the present invention are not impaired.

The pressure-sensitive adhesive surface of the double-sided pressure-sensitive adhesive sheet of the present invention may be protected by a separator (release liner) until it is used. Each pressure-sensitive adhesive surface of the double-sided pressure-sensitive adhesive sheet may be protected by using two separators, respectively, or protected in such a way that the surface is wound in a roll form by using one separator of which both sides are release surfaces. The separator is used as a protective material of the pressure-sensitive adhesive surface, and peeled when the pressure-sensitive adhesive layer is laminated to an adherend. Any known release paper may be used as a separator. The separator may be, but not particularly limited to, for example, a substrate having a release treated layer, a low adhesive substrate composed of a fluorine polymer, or a low adhesive substrate composed of a non-polar polymer. As the substrate having the release treated layer, examples thereof include a plastic film or paper whose surface is treated by a release treating agent such as silicon type, long-chaine alkyl type, fluorine type, and molybdenum sulfide. As the fluorine-based polymer, examples thereof include polytetrafluoroethylene, polychlorotrifluoroethylene, polyvinyl fluoride, polyvinylidene fluoride, a tetrafluoroethylene-hexafluoropropylene copolymer and a chlorofluoroethylene-vinylidene fluoride copolymer. As the non-polar polymer, examples thereof include an olefine-based resin (for example, polyethylene, polypropylene and the like). The separator can be formed by using a known/general method. The thickness of the separator is not particularly limited.

The double-sided pressure-sensitive adhesive sheet of the present invention can be manufactured using a known or conventional manufacturing method. More specifically, it can be manufactured by directly forming an acrylic pressure-sensitive adhesive layer on the surface of a polyolefin foam substrate (direct method) or by forming an acrylic pressure-sensitive adhesive layer on a separator and then transferring (laminating) it to a polyolefin foam substrate to form the acrylic pressure-sensitive adhesive layer on the surface of the polyolefin foam substrate (transfer method). Of these, it is more preferred to manufacture the double-sided pressure-sensitive adhesive sheet of the present invention by forming an acrylic pressure-sensitive adhesive layer on a separator and then laminating the acrylic pressure-sensitive adhesive layer on both surfaces of the polyolefin foam substrate (transfer method), from the standpoint of smoothness of the adhesive surface (surface of the pressure-sensitive adhesive layer).

Although the thickness (total thickness) of the double-sided pressure-sensitive adhesive sheet of the present invention is not particularly limited, it is preferably from 50 to 2,000 $\mu$m, more preferably from 80 to 1,700 $\mu$m, and still more preferably from 100 to 1,500 $\mu$m. The sheet having a thickness of 50 $\mu$m or more has improved impact resistance. The term "thickness (total thickness) of the double-sided pressure-sensitive adhesive sheet" means the thickness from one pressure-sensitive adhesive surface to the other pressure-sensitive adhesive surface and even if the sheet has a separator, the thickness does not include that of the separator.

When the double-sided pressure-sensitive adhesive sheet of the present invention has a relatively small thickness, more specifically, it has a thickness within a range of from 50 to 600 $\mu$m (preferably from 100 to 500 $\mu$m), the sheet is, in addition to being excellent in waterproof property and impact resistance, effective for reducing weight, size, and film thickness of products using the sheet. It is therefore used preferably for applications such as mobile electronic devices, for example, mobile phones and smartphones.

When the double-sided pressure-sensitive adhesive sheet of the present invention has a relatively large thickness, more specifically, it has a thickness within a range of from 300 to 2,000 $\mu$m (preferably from 400 to 1,500 $\mu$m), products using the  sheet can exhibit particularly high impact resistance so that it can be used preferably for heavy products, for example, large-sized flat panel displays of personal computer or television.

Although the interlayer peeling strength of the double-sided pressure-sensitive adhesive sheet of the present invention is not particularly limited, it is preferably 8 N/20 mm or more, and more preferably 12 N/20 mm or more. The double-sided pressure-sensitive adhesive sheet having an interlayer peeling strength of 8 N/20 mm or more has improved removability because split of the polyolefin foam substrate, which may occur during releasing of the double-sided pressure-sensitive adhesive sheet from the adherend is suppressed.

The term "interlayer peeling strength" means peeling adhesion strength when aluminum foils laminated onto the pressure-sensitive adhesive surfaces on both sides of the double-sided pressure-sensitive adhesive sheet, respectively, are subjected to a T-peel test at a tensile speed of 500 mm/min. The interlayer peeling strength can be measured using, as an evaluation sample, a T-peel test specimen prepared using an aluminum foil as a flexible adherend material and a double-sided pressure-sensitive adhesive sheet as an adhesive layer according to JIS K6854-3. More specifically, it can be measured using the following method.

[Measurement method of interlayer peeling strength]

(Preparation of evaluation sample)

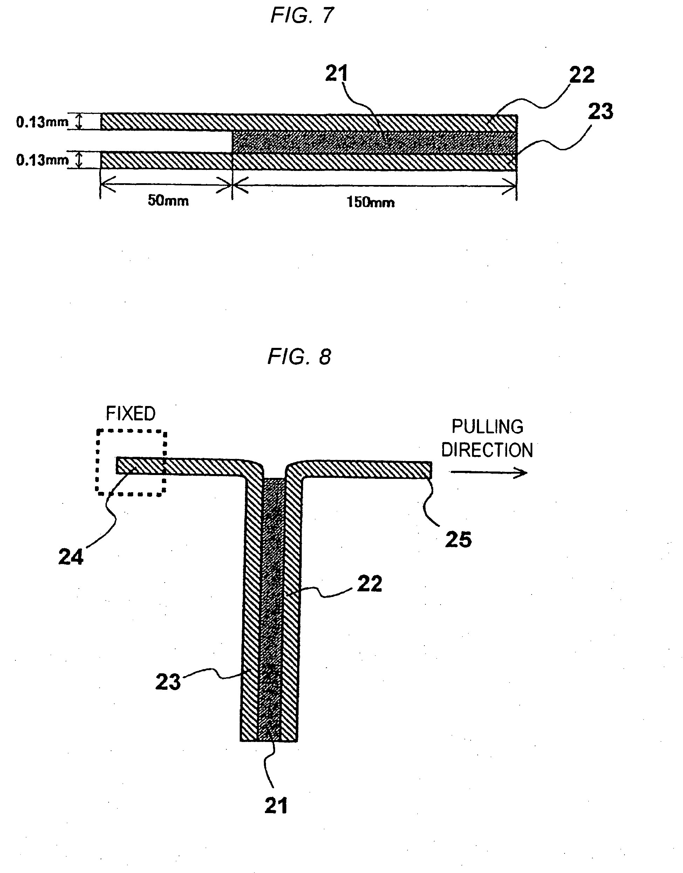

FIG. 7 is a schematic view (cross-sectional view) of an evaluation sample to be used for the measurement of interlayer peeling strength. In FIG. 7, 21 indicates a double-sided pressure-sensitive adhesive sheet, and 22 and 23 indicate aluminum foils.

First, the aluminum foil 22 (30 mm width and 200 mm length with a thickness of 0.13 mm) and the aluminum foil 23 (3.0 mm width and 200 mm length with a thickness of 0.13 mm) are laminated to the pressure-sensitive adhesive surfaces on both sides of the double-sided pressure-sensitive adhesive sheet 21 (20 mm width and 150 mm length), respectively, by moving a 2-kg rubber roller back and forth once, to prepare an evaluation sample (refer to FIG. 7). The evaluation sample has, as shown in FIG. 7, a structure in which a portion of the aluminum foil 22 and a portion of the aluminum foil 23, each corresponding to 50 mm from one end of the foil has not been in contact with the double-sided pressure-sensitive sheet 21 (such a portion of the aluminum foil not in contact with the double-sided pressure-sensitive adhesive sheet may be called "protruded portion"). Then, the evaluation sample is aged at 23°C and 50% RH for 0.5 hour.

(Measurement of interlayer peeling strength)

FIG. 8 is a schematic view (cross-sectional view) showing the measurement method of interlayer peeling strength. In FIG. 8, 24 and 25 indicate protruded portions of the aluminum foil in the evaluation sample, respectively.

By using a tensile tester in the atmosphere of 23°C and 50%RH, the protruded portion 24 of one of the aluminum foils of the evaluation sample is fixed. The protruded portion 25 of the other aluminum foil it is grasped, followed by pulling at a tensile speed of 500 mm/min in the direction shown in FIG. 8. The peeling adhesion strength when peeling (T-peeling) between aluminum foils 22 and 23 occurred is designated as interlayer peeling strength (N/20 mm). It is preferred to carry out this test (n) times, for example, three times and calculate the average.

In the measurement of the interlayer peeling strength, the T-peel of the evaluation sample occurs mainly due to split or breakage of the polyolefin foam substrate of the double-sided pressure-sensitive adhesive sheet. This means that the interlayer peeling strength provides an indication of the likelihood of split or breakage of the polyolefin foam substrate when the double-sided pressure-sensitive adhesive sheet of the present invention is peeled from an adherend. When the interlayer peeling strength is large, the double-sided pressure-sensitive adhesive sheet has improved removability because split or breakage of the polyolefin foam substrate hardly occurs when the sheet is peeled. The double-sided pressure-sensitive adhesive sheet of the present invention having an interlayer peeling strength controlled within the above range can therefore exhibit excellent removability.

Although the interlayer peeling strength of the double-sided pressure-sensitive adhesive sheet is not particularly limited, it can be controlled by the crosslink density, expansion ratio, or the like of the polyolefin foam substrate.

Although the pressure adhesive force of the double-sided pressure-sensitive adhesive sheet of the present invention used for lamination of a polycarbonate plate and an acrylic plate by contact bonding by moving a 2-kg roller back and forth once is not particularly limited, it is preferably 10 N/cm$^2$ or more, and more preferably 15 N/cm$^2$ or more. The double-sided pressure-sensitive adhesive sheet having a pressure adhesive force of 10 N/cm$^2$ or more exhibits improved adhesion reliability because members laminated using the double-sided pressure-sensitive adhesive sheet hardly peel by the internal stress. In such a case, the double-sided pressure-sensitive adhesive sheet of the present invention can be used preferably for an adherend having difficulty in lamination with a great force (pressure) (for example, a fragile adherend, a flexible adherend, or an adherend with an uneven surface).

The pressure adhesive force is defined as a maximum stress when, in an evaluation sample manufactured by contact bonding by moving a 2-kg roller back and forth once and thereby laminating a polycarbonate plate and an acrylic plate via a double-sided pressure-sensitive adhesive sheet having a window-frame shape (which may also be called "picture-frame shape") having a size of 60 mm length and 40 mm width with a window-frame width of 1 mm , a pressure is applied to the acrylic plate in the thickness direction from the inside to the outside thereof at a loading rate of 10 mm/min until the evaluation sample is separated into the acrylic plate and the polycarbonate plate. More specifically, the pressure adhesive force can be measured, for example, by the following procedure.

(Measurement method of pressure adhesive force)

First, cut a double-sided pressure-sensitive adhesive sheet is cut into a window-frame shape (picture-frame shape) (60 mm length and 40 mm width) having a window-frame width (picture-frame width) of 1 mm to obtain a window-frame-shaped double-sided pressure-sensitive adhesive sheet.

Next, by using the window-frame-shaped double-sided pressure-sensitive adhesive sheet, an acrylic plate (60 mm length and 40 mm width with a thickness of 1 mm) and a polycarbonate plate (PC plate) (80 mm length and 70 mm width with a thickness of 2 mm) having, at the center thereof, a penetration hole 15 mm in diameter are contact-bonded by moving a 2-kg roller back and forth once, thereby laminating them to prepare an evaluation sample.

Next, at normal temperature, the evaluation sample is set in a universal tensile and compression testing machine (apparatus name: "Tensile and compression testing machine "TG-1kN", manufactured by Minebea Co., Ltd.) and a rod is allowed to pass through the penetration hole of the polycarbonate plate. The maximum stress when a pressure is applied to the acrylic plate by using the rod at a loading rate of 10 mm/min until the evaluation sample is separated into the acrylic plate and the polycarbonate plate is designated as the pressure adhesive force.

The pressure adhesive force of the double-sided pressure-sensitive adhesive sheet of the present invention can be controlled, for example, by the thickness or composition of the polyolefin foam substrate or the pressure-sensitive adhesive layer, the expansion ratio of the polyolefin foam substrate, or the like.

In the double-sided pressure-sensitive adhesive sheet of the present invention, the optical characteristics of the double-sided pressure-sensitive adhesive sheet such as transmittance or reflectance can be controlled by coloring the polyolefin foam substrate.

For example, when the double-sided pressure-sensitive adhesive sheet of the present invention is used for light shielding purpose, a visible light transmittance is set to preferably 15% or less (for example, from 0 to 15%), and more preferably 10% or less (for example, from 0 to 10%) by coloring the polyolefin foam substrate black. When the double-sided pressure-sensitive adhesive sheet of the present invention is used for light reflecting purpose, a visible light reflectance is set to preferably 20% or more (for example, from 20 to 100%), and more preferably 25% or more (for example, from 25 to 100%) by coloring the polyolefin foam substrate white. The double-sided pressure-sensitive adhesive sheet of the present invention having thus controlled optical characteristics can be used, for example, as optical members such as light diffusion members, scattering element members, and light collecting members.

The double-sided pressure-sensitive adhesive sheet of the present invention has, as described above, a polyolefin substrate excellent in both waterproof property and impact resistance. It is therefore suited for use in electronics-related applications particularly requiring waterproof property and impact resistance, for example, for fixing the lens of a mobile phone, for fixing a key module member of a mobile phone, as an impact-resistant material of electronic devices, for fixing a decoration panel of television, for protecting a battery pack of a personal computer, and for water-proofing of the lens of a digital video camera. More specifically, the double-sided pressure-sensitive adhesive sheet of the present invention is preferably used for mobile electronic devices, particularly, mobile electronic devices (such as mobile phones and smartphones) having therein a liquid-crystal display device.

Moreover, for example, when particularly the degree of dispersion of the acrylic polymer and the ratio of components having a molecular weight of 100,000 or less in the acrylic polymer are controlled to fall within the above ranges, respectively, the resulting acrylic pressure-sensitive adhesive layer has an improved anchoring property to the polyolefin foam substrate and as a result, the double-sided pressure-sensitive adhesive sheet of the present invention can exhibit excellent removability. Furthermore, the double-sided pressure-sensitive adhesive sheet of the present invention can exhibit more excellent removability when the pressure-sensitive adhesive composition forming the acrylic pressure-sensitive adhesive layer has a specific composition, because a time-dependent increase in pressure-sensitive adhesive force to an adherent is suppressed. Such double-sided pressure-sensitive adhesive sheets of the present invention can also be used preferably for fixing members (parts) (particularly for fixing members in electronic devices) with a view to collecting or easily disassembling these members (parts).

Although not particularly limited, the double-sided pressure-sensitive adhesive sheet of the present invention can be used when an adherend is made of a metal such as stainless or aluminum, glass, or a plastic (resin) such as polycarbonate, polymethyl methacrylate (PMMA), polypropylene, or polyethylene terephthalate (PET), or a composite material thereof.

Examples

The present invention will hereinafter be described in further detail by Examples. It should however be borne in mind that the present invention is not limited to or by these Examples.

Preparation Example 1 (preparation of acrylic polymer)

In a reactor equipped with a condenser tube, a nitrogen inlet tube, a thermometer, a dropping funnel, and a stirrer, 100 parts by weight of n-butyl acrylate, 2 parts by weight of acrylic acid, 8 parts by weight of vinyl acetate, 0.1 part by weight of 2-hydroxyethyl acrylate, and, as a polymerization initiator, 0.2 part by weight of azobisisobutyronitrile (AIBN) (10-hour half-life temperature: 65°C) were added to 172 parts by weight of a mixed solvent of toluene and ethyl acetate (toluene/ethyl acetate =5/5 weight ratio). Next, after nitrogen reflux for one hour at room temperature, the temperature was increased and a polymerization reaction was conducted at 58°C for 6 hours as a primary reaction. The temperature was then increased further and a first aging reaction was conducted at 65°C for 2 hours. The temperature was increased again and a second aging reaction was conducted at 72°C for 2 hours. Then, the reaction mixture was allowed to cool to obtain an acrylic polymer solution (which will be called "acrylic polymer solution A"). The acrylic polymer (which will be called "acrylic polymer A") in the acrylic polymer solution A had a weight average molecular weight of 600,000, a weight average molecular weight/number average molecular weight ratio (degree of dispersion) of 5.0, and a ratio (content), in the whole polymer, of a polymer having a molecular weight of 100,000 or less of 20 wt%.

Preparation Example 2 (preparation of acrylic polymer)

In a manner similar to Preparation Example 1 except that the solvent (organic solvent) was replaced by a mixed solvent of toluene and ethyl acetate (toluene/ethyl acetate = 8/2 weight ratio) and the primary reaction was conducted at 56°C for 6 hours, followed by a first aging reaction at 64°C for 2 hours, temperature elevation, and a second aging reaction at 73°C for 3 hours, an acrylic polymer solution (which will be called "acrylic polymer solution B") was obtained. The acrylic polymer (which will be called "acrylic polymer B") in the acrylic polymer solution B had a weight average molecular weight of 550,000, a weight average molecular weight/number average  molecular weight ratio of 6.2, and a ratio (content), in the whole polymer, of a polymer having a molecular weight of 100,000 or less of 22 wt%.

Preparation Example 3 (preparation of acrylic polymer)

In a manner similar to Preparation Example 1 except that the solvent (organic solvent) was replaced by a mixed solvent of toluene and ethyl acetate (toluene/ethyl acetate = 9/1 weight ratio) and the primary reaction was conducted at 60°C for 6 hours, followed by a first aging reaction at 66°C for 3 hours, temperature elevation, and a second aging reaction at 74°C for 1 hour, an acrylic polymer solution (which will be called "acrylic polymer solution C") was obtained. The acrylic polymer (which will be called "acrylic polymer C") in the acrylic polymer solution C had a weight average molecular weight of 520,000, a weight average molecular weight/number average molecular weight ratio of 6.9, and a ratio (content), in the whole polymer, of a polymer having a molecular weight of 100,000 or less of 27 wt%.

Preparation Example 4 (preparation of acrylic polymer)

In a reactor equipped with a condenser tube, a nitrogen inlet tube, a thermometer, a dropping funnel, and a stirrer, 100 parts by weight of n-butyl acrylate, 7 parts by weight of acrylic acid, 8 parts by weight of vinyl acetate, 0.1 part by weight of 2-hydroxyethyl acrylate, and, as a polymerization initiator, 0.2 part by weight of AIBN (10-hour half-life temperature: 65°C) were added to 172 parts by weight of a mixed solvent of toluene and ethyl acetate (toluene/ethyl acetate =7/3 weight ratio). Next, after nitrogen reflux for one hour at room temperature, the temperature was increased and a polymerization reaction was conducted at 58°C for 6 hours as a primary reaction. The temperature was then increased further and a first aging reaction was conducted at 65°C for 2 hours. The temperature was increased again and a second aging reaction was conducted at 72°C for 2 hours. Then, the reaction mixture was allowed to cool to obtain an acrylic polymer solution (which will be called "acrylic polymer solution D"). The acrylic polymer (which will be called "acrylic polymer D") in the acrylic polymer solution D had a weight average molecular weight of 550,000, a weight average molecular weight/number average molecular weight ratio of 5.6, and a ratio (content), in the whole polymer, of a polymer having a molecular weight of 100,000 or less of 24 wt%.

Preparation Example 5 (preparation of acrylic polymer)

In a manner similar to Preparation Example 1 except that only the primary reaction was conducted at 57°C for 12 hours without conducting aging reactions (first aging reaction and second aging reaction), an acrylic polymer solution (which will be called "acrylic polymer solution E") was obtained. The acrylic polymer (which will be called "acrylic polymer E") in the acrylic polymer solution E had a weight average molecular weight of 650,000, a weight average molecular weight/number average molecular weight ratio of 2.8, and a ratio (content), in the whole polymer, of a polymer having a molecular weight of 100,000 or less of 9 wt%.

Preparation Example 6 (preparation of acrylic polymer)

In a manner similar to Preparation Example 3 except that the aging reaction was conducted not twice but once at 77°C for 3 hours, an acrylic polymer solution (which will be called "acrylic polymer solution F") was obtained. The acrylic polymer (which will be called "acrylic polymer F") in the acrylic polymer solution F had a weight average molecular weight of 500,000, a weight average molecular weight/number average molecular weight ratio of 11.2, and a ratio (content), in the whole polymer, of a polymer having a molecular weight of 100,000 or less of 35 wt%.

Preparation Example 7 (preparation of acrylic pressure-sensitive adhesive composition)

An acrylic pressure-sensitive adhesive composition (which will be called "pressure-sensitive adhesive 1") was obtained by adding, as tackifying resins, 10 parts by weight of trade name "TAMANOL 803" (rosin phenol resin, manufactured by Arakawa Chemical Industries, Ltd.), 10 parts by weight of trade name "Ester Gum H" ( hydrogenated rosin glycerin ester, manufactured by Arakawa Chemical Industries, Ltd.), and 15 parts by weight of trade name "Pensel D125" (polymerized rosin pentaerythritol ester, manufactured by Arakawa Chemical Industries, Ltd.) to the acrylic polymer solution A obtained in Preparation Example 1, and then adding 2 parts by weight (in terms of solid content) of trade name "CORONATE L" (isocyanate crosslinking agent, manufactured by Nippon Polyurethane Industry Co., Ltd.) as a crosslinking agent, each based on 100 parts by weight of the acrylic polymer A.

Preparation Example 8 (preparation of acrylic pressure-sensitive adhesive composition)

In a manner similar to Preparation Example 7 except that the acrylic polymer solution A was replaced with the acrylic polymer solution B obtained in Preparation Example 2, an acrylic pressure-sensitive adhesive composition (which will be called "pressure-sensitive adhesive 2") was prepared.

Preparation Example 9 (preparation of acrylic pressure-sensitive adhesive composition)

In a manner similar to Preparation Example 7 except that the acrylic polymer solution A was replaced by the acrylic polymer solution C obtained in Preparation Example 3, an acrylic pressure-sensitive adhesive composition (which will be called "pressure-sensitive adhesive 3") was prepared.

Preparation Example 10 (preparation of acrylic pressure-sensitive adhesive composition)

In a manner similar to Preparation Example 7 except that the acrylic polymer solution A was replaced by the acrylic polymer solution D obtained in Preparation Example 4, an acrylic pressure-sensitive adhesive composition (which will be called "pressure-sensitive adhesive 4") was prepared.

Preparation Example 11 (preparation of acrylic pressure-sensitive adhesive composition)

In a manner similar to Preparation Example 7 except that the acrylic polymer solution A was replaced by the acrylic polymer solution E obtained in Preparation Example 5, an acrylic pressure-sensitive adhesive composition (which will be called "pressure-sensitive adhesive 5") was prepared.

Preparation Example 12 (preparation of acrylic pressure-sensitive adhesive composition)

In a manner similar to Preparation Example 7 except that the acrylic polymer solution A was replaced by the acrylic polymer solution F obtained in Preparation Example 6, an acrylic pressure-sensitive adhesive composition (which will be called "pressure-sensitive adhesive 6") was prepared.

Preparation Example 13 (preparation of acrylic pressure-sensitive adhesive composition)

An acrylic pressure-sensitive adhesive composition (which will be called "pressure-sensitive adhesive 7") was obtained by adding, as tackifying resins, 10 parts by weight of trade name "TAMANOL 803" (rosin phenol resin, manufactured by Arakawa Chemical Industries, Ltd.), 10 parts by weight of trade name "Ester Gum H" (hydrogenated rosin glycerin ester, manufactured by Arakawa Chemical Industries, Ltd.), and 15 parts by weight of trade name "PENSEL D125" (polymerized rosin pentaerythritol ester, manufactured by Arakawa Chemical Industries, Ltd.) to the acrylic polymer solution A obtained in Preparation Example 1 and then adding 5 parts by weight (in terms of solid content) of trade name "CORONATE L" (isocyanate crosslinking agent, manufactured by Nippon Polyurethane Industry Co., Ltd.) as a crosslinking agent, each based on 100 parts by weight of the acrylic polymer A.

Preparation Example 14 (preparation of acrylic pressure-sensitive adhesive composition)

An acrylic pressure-sensitive adhesive composition (which will be called "pressure-sensitive adhesive 8") was obtained by adding, as tackifying resins, 10 parts by weight of trade name "TAMANOL 803" (rosin phenol resin, manufactured by Arakawa Chemical Industries, Ltd.), 10 parts by weight of trade name "Ester Gum H" (hydrogenated rosin glycerin ester, manufactured by Arakawa Chemical Industries, Ltd.), and 15 parts by weight of trade name "PENSEL D125" (polymerized rosin pentaerythritol ester, manufactured by Arakawa Chemical Industries, Ltd.) to the acrylic polymer solution A obtained in Preparation Example 1 and then adding 0.5 part by weight (in terms of solid content) of trade name "CORONATE L" (isocyanate crosslinking agent, manufactured by Nippon Polyurethane Industry Co., Ltd.) as a crosslinking agent, each based on 100 parts by weight of the acrylic polymer A.

Example 1

A pressure-sensitive adhesive layer was formed by applying the pressure-sensitive adhesive 1 to the surface on one side of a commercially available separator (trade name "SLB-80W3D", manufactured by Sumikakakoushi Co., Ltd.) so as to give a thickness after drying of 50 $\mu$m, followed by drying at 100°C for 2 minutes. The resulting surface of the pressure-sensitive adhesive layer was lamianted to the surface on one side of a foam substrate (which will be called "substrate 1") composed of a polyethylene resin and having a degree of crosslinking of 30 wt%, a volume percentage of closed cells of 85%, and a thickness of 150 $\mu$m (dent resistance: 72%, tensile strength (MD): 12.0 MPa, tensile strength (TD): 7.5 MPa) to obtain a single-sided pressure-sensitive adhesive sheet.

Then, the pressure-sensitive adhesive 1 was applied to the surface on one side of a separator (trade name "SLB-80W3D", manufactured by Sumikakakoushi Co., Ltd.) so as to give a thickness after drying of 50 $\mu$m, followed by drying at 100°C for 2 minutes to prepare a pressure-sensitive adhesive layer. The surface of the pressure-sensitive adhesive layer thus prepared was laminated to the other surface of the foam substrate of the single-sided pressure-sensitive adhesive sheet. The laminated structure thus obtained was subject to pass through a laminator (0.3 MPa, velocity: 0.5 m/min) of 80°C once and then cured for 3 days in an oven of 50°C. In such a manner, a 250-$\mu$m thick double-sided pressure-sensitive adhesive sheet having a constitution of "separator/pressure-sensitive adhesive layer/ foam substrate/pressure-sensitive adhesive layer/separator" was obtained.

Example 2

In a manner similar to Example 1 except for the use of the pressure-sensitive adhesive 2 instead of the pressure-sensitive adhesive 1, a double-sided pressure-sensitive adhesive sheet having a thickness of 250 $\mu$m was obtained.

Example 3

In a manner similar to Example 1 except for the use of the pressure-sensitive adhesive 3 instead of the pressure-sensitive adhesive 1, a double-sided pressure-sensitive adhesive sheet having a thickness of 250 $\mu$m was obtained.

Example 4

In a manner similar to Example 1 except for the use of the pressure-sensitive adhesive 4 instead of the pressure-sensitive adhesive 1, a double-sided pressure-sensitive adhesive sheet having a thickness of 250 $\mu$m was obtained.

Example 5

In a manner similar to Example 1 except for the use of the pressure-sensitive adhesive 5 instead of the pressure-sensitive adhesive 1, a double-sided pressure-sensitive adhesive sheet having a thickness of 250 $\mu$m was obtained.

Example 6

In a manner similar to Example 1 except for the use of the pressure-sensitive adhesive 6 instead of the pressure-sensitive adhesive 1, a double-sided pressure-sensitive adhesive sheet having a thickness of 250 μm was obtained.

Example 7

In a manner similar to Example 1 except for the use of the pressure-sensitive adhesive 7 instead of the pressure-sensitive adhesive 1, a double-sided pressure-sensitive adhesive sheet having a thickness of 250 μm was obtained.

Example 8

In a manner similar to Example 1 except for the use of the pressure-sensitive adhesive 8 instead of the pressure-sensitive adhesive 1, a double-sided pressure-sensitive adhesive sheet having a thickness of 250 μm was obtained.

Example 9

In a manner similar to Example 1 except that the substrate 1 was replaced with a foam substrate (which will be called "substrate 4") composed of a polyethylene resin and having a degree of crosslinking of 3 wt%, a volume percentage of closed cells of 85%, and a thickness of 100 μm (dent resistance: 15%, tensile strength (MD): 1.0 MPa, tensile strength (TD): 0.5 MPa), a double-sided pressure-sensitive adhesive sheet having a thickness of 200 μm was obtained.

Comparative Example 1

In a manner similar to Example 1 except that the substrate 1 was replaced with a foam substrate (which will be called "substrate 2") composed of a polyethylene resin and having a degree of crosslinking of 30 wt%, a volume percentage of closed cells of 35%, and a thickness of 200 μm (dent resistance: 67%, tensile strength (MD): 10.3 MPa, tensile strength (TD): 6.4 MPa), a double-sided pressure-sensitive adhesive sheet having a thickness of 300 μm was obtained.

Comparative Example 2

In a manner similar to Example 1 except that the substrate 1 was replaced with a foam substrate (which will be called "substrate 3") composed of a polyethylene resin and having a degree of crosslinking of 90 wt%, a volume percentage of closed cells of 85%, and a thickness of 200 μm (dent resistance: 76%, tensile strength (MD): 14.0 MPa, tensile strength (TD): 9.1 MPa), a double-sided pressure-sensitive adhesive sheet having a thickness of 300 μm was obtained.

Table 1 shows the degree of crosslinking, volume percentage of closed cells, thickness, tensile strength (MD and TD), and dent resistance of the foam substrates (substrates 1 to 4) used in Examples and Comparative Examples.

(Table 1)

|  |  | Substrate 1 | Substrate 2 | Substrate 3 | Substrate 4 |
|---|---|---|---|---|---|
| Thickness | [μm] | 150 | 200 | 200 | 100 |
| Tensile strength (MD) | [MPa] | 12.0 | 10.3 | 14.0 | 1.0 |
| Tensile strength (TD] | [MPa] | 7.5 | 6.4 | 9.1 | 0.5 |
| Volume percentage of closed cells | [%] | 85 | 35 | 85 | 85 |
| Degree of crosslinking | [wt%] | 30 | 30 | 90 | 3 |
| Dent resistance | [%] | 72 | 67 | 76 | 15 |

(Evaluation)

The double-sided pressure-sensitive adhesive sheets obtained in Examples and Comparative Examples were measured or evaluated for haze of the pressure-sensitive adhesive layer, a gel fraction of the pressure-sensitive adhesive layer, waterproof property, impact resistance, tackiness, anchoring property (anchoring property of the pressure-sensitive adhesive layer to the foam substrate), removability, and pressure-sensitive adhesive force (180° peel pressure-sensitive adhesive force). The gel fraction of the pressure-sensitive adhesive layer was measured in the above-described method.

(1) Haze of pressure-sensitive adhesive layer

The haze of the pressure-sensitive adhesive layer of the double-sided pressure-sensitive adhesive sheets obtained in Examples and Comparative Examples was measured in the following procedure:

A pressure-sensitive adhesive layer was formed by applying each of the pressure-sensitive adhesives 1 to 8 obtained in Preparation Examples 7 to 14 to one of the surfaces of a separator (trade name "SLB-80W3D", manufacutred by Sumikakakoushi Co., Ltd.) so as to give a thickness after drying of 50 $\mu$m, followed by drying at 100°C for 2 minutes. Then, the pressure-sensitive adhesive layer was laminated to a slide glass (total light transmittance: 91.8%, haze: 0.4%) and the separator was released to obtain an evaluation sample. The haze of the evaluation sample was measured using a haze meter (trade name "HM-150", manufactured by Murakami Color Research Laboratory Co., Ltd.) according to JIS K7136 to determine the haze of the pressure-sensitive adhesive layer. The results are shown in the column of "Haze" in Table 2.

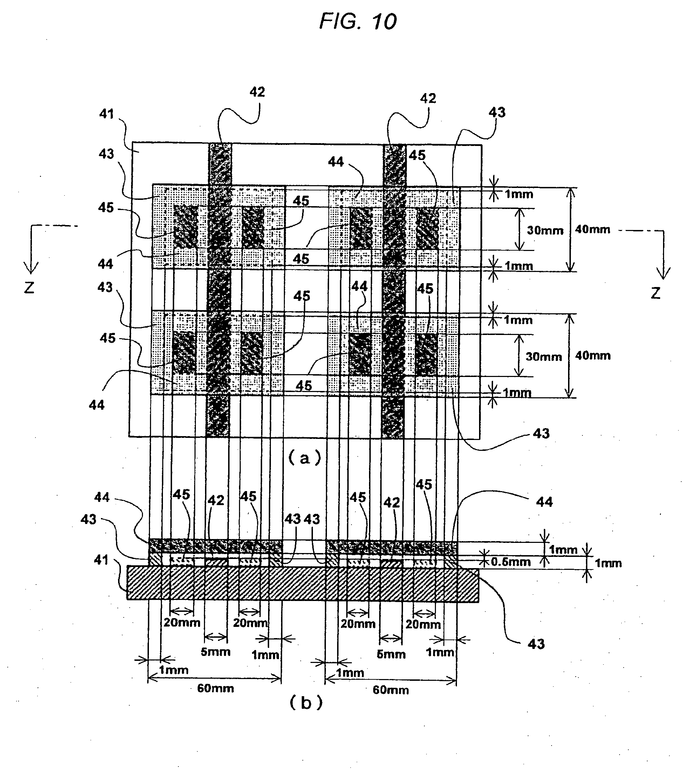

(2) Waterproof property (waterproof characteristics) (refer to FIGS. 10(a) to (b))

FIGS. 10(a) to (b) are a schematic view of an evaluation sample to be used for evaluation of waterproof property, in which FIG. 10(a) is a plan view and FIG. 10(b) is a Z-Z cross-sectional view of the (a). In FIGS. 10(a) to (b), 41 indicates a polycarbonate plate, 42 indicates a step tape, 43 indicates a window-flame-shaped double-sided pressure-sensitive adhesive sheet, 44 indicates an acrylic plate (acrylic lens), and 45 indicates a nonwoven fabric. The waterproof property is evaluated in the following procedure.

The double-sided pressure-sensitive adhesive sheets obtained in Examples and Comparative Examples were cut into a 1-mm wide window-frame shape (picture-frame shape) (60 mm width and 40 mm length) to obtain window-frame shaped double-sided pressure-sensitive adhesive sheets, respectively.

Next, the resulting window-frame shaped double-sided pressure-sensitive adhesive sheets were each laminated to four acrylic plates (acrylic lenses, 60 mm width and 40 mm length with a thickness of 1 mm). As illustrated in FIGS. 10(a) to (b), the four acrylic plats to which the window-frame shaped double-sided pressure-sensitive sheet had been laminated were contact bonded to a polycarbonate plate (PC plate) to which two step tapes (width: 5 mm) had been attached, by moving a 2-kg roller back and forth once, to obtain an evaluation sample having a step height (10 $\mu$m, 20 $\mu$m, 30 $\mu$m, 50 $\mu$m, 70 $\mu$m, or 100 $\mu$m) (refer to FIGS. 10(a) to (b)).

The step tapes were attached to the polycarbonate plates to provide them with unevenness and thus, the polycarbonate plates had intended step height.

In addition, in a similar procedure to the above, an evaluation sample having a step height of 0 $\mu$m (no step difference) was obtained by contact bonding four acrylic plates to which the window-frame shaped double-sided pressure-sensitive adhesive sheet has been laminated to a polycarbonate plate (having a flat surface without two step tapes) by moving a 2-kg roller back and forth once.

A nonwoven fabric (35 mm width and 55 mm length with a thickness of 0.05 mm) was inserted between the acrylic plate and the polycarbonate plate to visually observe the penetration of water because it changes color when absorbing water therein. The nonwoven fabric has no influence on the evaluation test of waterproof property.

The evaluation test of waterproof property was conducted based on IPX7 standards (JIS C0920/IEC60529). More specifically, evaluation samples having respective step heights were submerged in a water tank of 1 m deep for 30 minutes under standard conditions (temperature: 23°C, humidity: 50%RH) and whether water penetrated in the evaluation sample or not was observed. As the evaluation samples, those aged for 30 minutes under standard conditions (temperature: 23°C, humidity: 50%RH) were used.

In evaluation of waterproof property of a double-sided pressure-sensitive adhesive sheet, two evaluation samples each having four acrylic plates laminated thereto (refer to FIGS. 10(a) and 10(b)) were prepared for each step height and eight samples (eight acrylic plate-laminated portions) in total were visually observed whether water penetrated into the sample or not. Evaluation results are shown in the column of "Waterproof property" in Table 2. Numbers in Table 2 are numbers of samples showing no water penetration therein and being evaluated as having "good waterproof property". For example, the number "8" in Table 2 means that all the eight samples were evaluated as having good waterproof property; the number "1" means that only one sample out of the eight samples was evaluated as having good waterproof property; and the number "0" means that penetration of water was observed from all the eight samples.

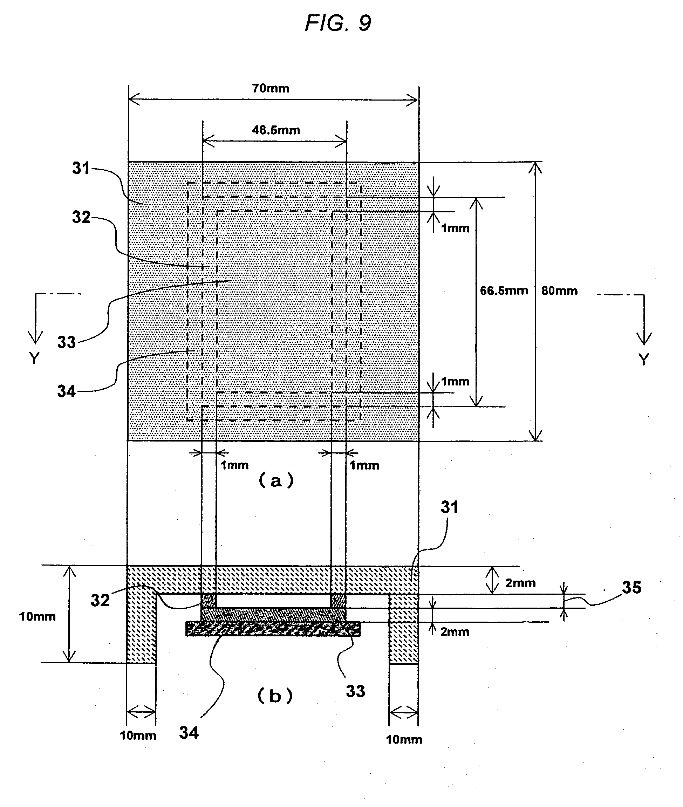

(3) Impact resistance (refer to FIGS. 9(a) to (b))

FIGS. 9 (a) to (b) are a schematic view of an evaluation sample to be used for evaluation of impact resistance, in which FIG. 9(a) is a plan view and FIG. 9(b) is a Y-Y cross-sectional view of FIG. 9(a). In FIG. 9 (a) to (b), 31 indicates a polycarbonate housing, 32 indicates a window-frame shaped double-sided pressure-sensitive adhesive sheet, 33 indicates a polycarbonate lens, and 34 indicates a weight. Impact resistance was evaluated in the following procedure.

The double-sided pressure-sensitive sheets obtained in Examples and Comparative Examples were cut into a 1-mm width window-frame shape (picture-frame shape) (48.5 mm width and 66.5 mm length) to prepare a window-frame shaped double-sided pressure-sensitive adhesive sheet 32.

Using the window-frame shaped double-sided pressure-sensitive adhesive sheet 32, the polycarbonate lens 33 (48.5 mm width and 66.5 mm length with a thickness of 2 mm and a weight of 8 g) and the polycarbonate housing 31 (PC housing) were contact bonded by moving a 2-kg roller back and forth once (refer to FIGS. 9(a) and (b)).

Then, a 10-g weight 34 (SUS plate) was attached to the polycarbonate lens 33 having the above structure (refer to FIGS. 9(a) to (b)) to prepare an evaluation sample (total weight: 85 g).

Impact resistance (impact resistance at low temperature) was evaluated by allowing the evaluation sample to fall freely from a height of 1.5 m to a concrete plate in the atmosphere of -5°C and repeating this free fall and based on the following standard. The results are shown in Table 1.

A (good impact resistance): even when free falls were repeated 40 times, the polycarbonate lens did not peel.

B (poor impact resistance): when free falls were repeated, the polycarbonate lens peeled during 40-times free falls.

(4) Tackiness

One of the separators was released from the double-sided pressure-sensitive adhesive sheets obtained in Examples and Comparative Examples to expose the pressure-sensitive adhesive surface. The strength of tackiness was confirmed by touching the pressure-sensitive adhesive surface with fingers and the strength of the tackiness was evaluated based on the following standards. The results are shown in Table 2.

A (Strong tack): strong tackiness
B (Intermediate tack): tackiness between A and C
C (Weak tack): weak tackiness

(5) Anchoring property (refer to FIGS. 7 and 8)

FIG. 7 is a schematic view (cross-sectional view) of an evaluation sample to be used for evaluation of an anchoring property. FIG. 8 is a schematic view (cross-sectional view) for describing the evaluation method of an anchoring property. In FIGS. 7 and 8, 21 indicates a double-sided pressure-sensitive adhesive sheet, 22 and 23 indicate aluminum foils, and 24 and 25 indicate protruded portions of the aluminum foils, respectively. The anchoring property is evaluated by the following procedure.

Separators were released from the double-sided pressure-sensitive adhesive sheet (20 mm width and 150 mm length) obtained in each of Examples and Comparative Examples. As shown in FIG. 7, aluminum foils (30 mm width and 200 mm length with a thickness of 0.13 mm) were laminated to the respective pressure-sensitive adhesive surfaces on both sides thereof by moving a 2-kg rubber roller back and forth once to prepare an evaluation sample. Then, the evaluation sample thus obtained was aged for 0.5 hour in the atmosphere of 23°C and 50%RH.

Next, one of the protruded portions (24 and 25 in FIG. 8) of the aluminum foils of the evaluation sample was fixed using a tensile tester in the atmosphere of 23°C and 50%RH. The other protruded portion was grasped and pulled in the direction shown in FIG. 8 at a tensile speed of 500 mm/min to cause peeling (T-peeling). The evaluation sample after T-peeling was observed visually and the anchoring property (anchoring property of the pressure-sensitive adhesive layer to the foam substrate) was evaluated based on the following standards. The results are shown in Table 2.

A (High anchoring property): The foam substrate is broken.

B (Low anchoring property): Only the pressure-sensitive adhesive layer remains in either one of the aluminum foils on both sides of the evaluation sample without causing breakage of the foam substrate.

(6) 180° peel pressure-sensitive adhesive force (to SUS304BA)

Each of the double-sided pressure-sensitive adhesive sheets obtained in Examples and Comparative Examples was cut into a piece having a size of 20 mm width and 100 mm length and a PET film (thickness: 25 $\mu$m) was laminated (backed) to one of the pressure-sensitive adhesive surface to prepare an evaluation sample. Then, the other pressure-sensitive adhesive surface (surface to be measured) of the evaluation sample was contact bonded to a SUS304BA plate by moving a 2-kg roller back and forth once. The resulting sample was aged for 30 minutes in the atmosphere of 23°C and 50% RH.

Then, the evaluation sample was peeled from the SUS304BA plate by using a universal tensile and compression testing machine (apparatus name "Tensile and Compression Testing Machine TG-1kN", manufactured by Minebea Co., Ltd.) at a tensile speed of 300 mm/min and a peeling angle of 180° in the atmosphere of 23 °C and 50% RH to measure 180° peel pressure-sensitive adhesive force (N/20 mm). Testing times (n) was three times and a calculated average value was shown in the column of "Pressure-sensitive adhesive force" in Table 2.

(7) Removability

The surface of the SUS304BA plate after the measurement of the "(6) 180° peel pressure-sensitive adhesive force" was observed visually and the double-sided pressure-sensitive adhesive sheets obtained in Examples and Comparative Examples were evaluated for removability.

When a portion of the foam and/or pressure-sensitive adhesive layer did not remain (in the case of interfacial peeling) on the surface of the SUS304BA plate after peeling of the double-sided pressure-sensitive adhesive sheet, the sheet was rated "A" (good removability), and when a portion of the polyolefin foam substrate or pressure-sensitive adhesive layer remained (in the case of interlayer peeling or cohesive peeling), the sheet was rated "B" (poor removability). The results are shown in Table 2. The term "interlayer peeling" means a mode of peeling in which a portion of a substrate (foam) remains on the surface of the SUS304BA plate and the term "cohesive peeling" means a mode of peeling in which only the acrylic pressure-sensitive adhesive layer remains on the surface of the SUS304BA plate.

(Table 2)

|  |  |  | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Double-sided pressure-sensitive adhesive sheet | Structure | Substrate | Substrate 1 | Substrate 1 | Substrate 1 | Substrate 1 | Substrate 1 | Substrate 1 | Substrate 1 | Substrate 1 | Substrate 4 |
|  |  | Pressure-sensitive adhesive | Pressure-sensitive adhesive 1 | Pressure-sensitive adhesive 2 | Pressure-sensitive adhesive 3 | Pressure-sensitive adhesive 4 | Pressure-sensitive adhesive 5 | Pressure-sensitive adhesive 6 | Pressure-sensitive adhesive 7 | Pressure-sensitive adhesive 8 | Pressure-sensitive adhesive 1 |
|  | Pressure-sensitive adhesive layer | Haze [%] | 12 | 12 | 12 | 35 | 12 | 12 | 12 | 12 | 12 |
|  |  | Gel fraction [%] | 31 | 29 | 28 | 29 | 27 | 27 | 65 | 5 | 31 |
|  | Thickness [μm] |  | 250 | 250 | 250 | 250 | 250 | 250 | 250 | 250 | 200 |
| Evaluation results | Waterproof property |  |  |  |  |  |  |  |  |  |  |
|  | No step |  | 8/8 | 8/8 | 8/8 | 8/8 | 8/8 | 8/8 | 8/8 | 8/8 | 8/8 |
|  | Step: 10 μm |  | 8/8 | 8/8 | 8/8 | 8/8 | 8/8 | 8/8 | 8/8 | 8/8 | 8/8 |
|  | Step: 20 μm |  | 8/8 | 8/8 | 8/8 | 8/8 | 8/8 | 8/8 | 8/8 | 8/8 | 8/8 |
|  | Step: 30 μm |  | 8/8 | 8/8 | 8/8 | 8/8 | 8/8 | 8/8 | 8/8 | 8/8 | 8/8 |
|  | Step: 50 μm |  | 8/8 | 8/8 | 8/8 | 8/8 | 8/8 | 8/8 | 8/8 | 8/8 | 8/8 |
|  | Step: 70 μm |  | 0/8 | 0/8 | 0/8 | 0/8 | 0/8 | 0/8 | 0/8 | 0/8 | 0/8 |
|  | Step: 100 μm |  | 0/8 | 0/8 | 0/8 | 0/8 | 0/8 | 0/8 | 0/8 | 0/8 | 0/8 |
|  | Impact resistance |  | A | A | A | A | A | A | A | A | A |
|  | Tackiness |  | A | A | A | C | A | A | B | A | A |
|  | Anchoring property |  | A | A | A | A | B | B | B | A | B |
|  | Removability |  | A | A | A | A | A | A | A | B | B |
|  | Pressure-sensitive adhesive force [N/20 mm] |  | 17 | 17 | 17 | 16 | 17 | 17 | 17 | 17 | 17 |

EP 2 546 053 B1

(Table 2 continued)

| | | | Comp. Ex. 1<br>Substrate 2 | Comp. Ex. 2<br>Substrate 3 |
|---|---|---|---|---|
| Double-sided pressure-sensitive adhesive sheet | Structure | Substrate | | |
| | | Pressure-sensitive adhesive | Pressure-sensitive adhesive 1 | Pressure-sensitive adhesive 1 |
| | Pressure-sensitive adhesive layer | Haze [%] | 12 | 12 |
| | | Gel fraction [%] | 31 | 31 |
| | | Thickness [μm] | 300 | 300 |
| Evaluation results | Waterproof property | No step | | |
| | | Step: 10 μm | 1/8 | 8/8 |
| | | Step: 20 μm | 1/8 | 8/8 |
| | | Step: 30 μm | 1/8 | 8/8 |
| | | Step: 50 μm | 1/8 | 8/8 |
| | | Step: 70 μm | 0/8 | 8/8 |
| | | Step: 100 μm | 0/8 | 0/8 |
| | Impact resistance | | A | 0/8 |
| | Tackiness | | A | B |
| | Anchoring property | | A | A |
| | Removability | | A | A |
| | Pressure-sensitive adhesive force [N/20 mm] | | 17 | A |
| | | | | 17 |

While the invention has been described in detail and with reference to specific embodiments thereof, it will be apparent to one skilled in the art that various changes and modifications can be made therein without departing from the spirit and scope thereof.

This application is based on Japanese Patent Application No. 2011-156359 filed on July 15, 2011, the entire subject matter of which is incorporated herein by reference.

The present invention provides the following double-sided pressure-sensitive adhesive sheet.

(1) A double-sided pressure-sensitive adhesive sheet comprising a polyolefin foam substrate and an acrylic pressure-sensitive adhesive layer on both surfaces of the polyolefin foam substrate,

wherein the polyolefin foam substrate has a volume percentage of closed cells of 70% or more and a degree of crosslinking of from 3 to 60 wt%, and

the acrylic pressure-sensitive adhesive layer is formed from a pressure-sensitive adhesive composition containing: an acrylic polymer formed from a component comprising, as an essential monomer component thereof, an alkyl (meth)acrylate having a linear or branched alkyl group; and a tackifying resin.

(2) The double-sided pressure-sensitive adhesive sheet according to (1), wherein the acrylic pressure-sensitive adhesive layer has a gel fraction of from 10 to 50 wt%.

(3) The double-sided pressure-sensitive adhesive sheet according to (1) or (2), wherein the acrylic polymer has a degree of dispersion [(weight average molecular weight)/(number average molecular weight)] of from 3 to 10.

(4) The double-sided pressure-sensitive adhesive sheet according to any one of (1) to (3), wherein the acrylic polymer comprises a component having a molecular weight of 100,000 or less in an amount of from 10 to 30 wt% based on the acrylic polymer.

(5) The double-sided pressure-sensitive adhesive sheet according to any one of (1) to (4), wherein the acrylic pressure-sensitive adhesive layer has a haze of from 3 to 30%.

(6) The double-sided pressure-sensitive adhesive sheet according to any one of (1) to (5), wherein the acrylic polymer is formed from a monomer component comprising a butyl acrylate in an amount of 60 wt% or more based on a total amount (100 wt%) of the monomer component forming the acrylic polymer.

(7) The double-sided pressure-sensitive adhesive sheet according to any one of (1) to (6), wherein the acrylic polymer is formed from a monomer component comprising an acrylic acid in an amount of from 1 to 5 wt% based on a total amount (100 wt%) of the monomer component forming the acrylic polymer.

(8) The double-sided pressure-sensitive adhesive sheet according to any one of (1) to (7), wherein the pressure-sensitive adhesive composition contains from 5 to 60 parts by weight of the tackifying resin based on 100 parts by weight of the acrylic polymer.

Description of Reference Numerals and Signs

11: Polyolefin foam substrate
12: Evaluation plate
13: Weight
14: Tip portion of weight
15: Thickness (Y1) of an undented portion
16: Thickness (Y2) of the most dented portion
21: Double-sided pressure-sensitive adhesive sheet
22: Aluminum foil
23: Aluminum foil
24: Protruded portion of aluminum foil
25: Protruded portion of aluminum foil
31: Polycarbonate housing
32: Window-frame shaped double-sided pressure-sensitive adhesive sheet
33: Polycarbonate lens
34: Weight (SUS plate)
35: Thickness of window-frame shaped double-sided pressure-sensitive adhesive sheet
41: Polycarbonate plate
42: Step tape
43: Window-frame shaped double-sided pressure-sensitive adhesive sheet
44: Acrylic plate
45: Nonwoven fabric

## Claims

1. A double-sided pressure-sensitive adhesive sheet comprising a polyolefin foam substrate and an acrylic pressure-sensitive adhesive layer on both surfaces of the polyolefin foam substrate,
   wherein the polyolefin foam substrate has a volume percentage of closed cells of 70% or more and a degree of crosslinking of from 3 to 60 wt%, and
   the acrylic pressure-sensitive adhesive layer is formed from a pressure-sensitive adhesive composition containing:
   an acrylic polymer formed from a component comprising, as an essential monomer component thereof, an alkyl (meth)acrylate having a linear or branched alkyl group; and a tackifying resin.

2. The double-sided pressure-sensitive adhesive sheet according to claim 1, wherein the acrylic pressure-sensitive adhesive layer has a gel fraction of from 10 to 50 wt%.

3. The double-sided pressure-sensitive adhesive sheet according to claim 1 or 2, wherein the acrylic polymer has a degree of dispersion [(weight average molecular weight)/(number average molecular weight)] of from 3 to 10.

4. The double-sided pressure-sensitive adhesive sheet according to any one of claims 1 to 3, wherein the acrylic polymer comprises a component having a molecular weight of 100,000 or less in an amount of from 10 to 30 wt% based on the acrylic polymer.

5. The double-sided pressure-sensitive adhesive sheet according to any one of claims 1 to 4, wherein the acrylic pressure-sensitive adhesive layer has a haze of from 3 to 30%.

6. The double-sided pressure-sensitive adhesive sheet according to any one of claims 1 to 5, wherein the acrylic polymer is formed from a monomer component comprising a butyl acrylate in an amount of 60 wt% or more based on a total amount (100 wt%) of the monomer component forming the acrylic polymer.

**7.** The double-sided pressure-sensitive adhesive sheet according to any one of claims 1 to 6, wherein the acrylic polymer is formed from a monomer component comprising an acrylic acid in an amount of from 1 to 5 wt% based on a total amount (100 wt%) of the monomer component forming the acrylic polymer.

**8.** The double-sided pressure-sensitive adhesive sheet according to any one of claims 1 to 7, wherein the pressure-sensitive adhesive composition contains from 5 to 60 parts by weight of the tackifying resin based on 100 parts by weight of the acrylic polymer.

**Patentansprüche**

**1.** Doppelseitige Haftklebefolie, umfassend ein Polyolefin-Schaumstoffsubstrat und eine Acryl-Haftkleberschicht auf beiden Oberflächen des Polyolefin-Schaumstoffsubstrats,
wobei das Polyolefin-Schaumstoffsubstrat einen Volumenanteil an geschlossenen Zellen von 70% oder mehr und einen Vernetzungsgrad von 3 bis 60 Gew.% aufweist und
die Acryl-Haftkleberschicht aus einer Haftkleberzusammensetzung gebildet ist, die enthält: ein Acrylpolymer, das aus einer Komponente gebildet ist, die als ihre wesentliche Monomerkomponente ein Alkyl(meth)acrylat mit einer linearen oder verzweigten Alkylgruppe umfasst; und ein Klebeharz.

**2.** Die doppelseitige Haftklebefolie nach Anspruch 1, wobei die Acryl-Haftkleberschicht einen Gelanteil von 10 bis 50 Gew.% aufweist.

**3.** Die doppelseitige Haftklebefolie nach Anspruch 1 oder 2, wobei das Acrylpolymer einen Dispersionsgrad [(gewichtsmittleres Molekulargewicht)/(zahlenmittleres Molekulargewicht)] von 3 bis 10 hat.

**4.** Die doppelseitige Haftklebefolie nach einem der Ansprüche 1 bis 3, wobei das Acrylpolymer eine Komponente mit einem Molekulargewicht von 100.000 oder weniger in einer Menge von 10 bis 30 Gew.%, bezogen auf das Acrylpolymer, umfasst.

**5.** Die doppelseitige Haftklebefolie nach einem der Ansprüche 1 bis 4, wobei die Acryl-Haftkleberschicht eine Trübung von 3 bis 30% aufweist.

**6.** Die doppelseitige Haftklebefolie nach einem der Ansprüche 1 bis 5, wobei das Acrylpolymer aus einer Monomerkomponente gebildet ist, die ein Butylacrylat in einer Menge von 60 Gew.% oder mehr umfasst, bezogen auf die Gesamtmenge (100 Gew.%) der das Acrylpolymer bildenden Monomerkomponente.

**7.** Die doppelseitige Haftklebefolie nach einem der Ansprüche 1 bis 6, wobei das Acrylpolymer aus einer Monomerkomponente gebildet ist, die eine Acrylsäure in einer Menge von 1 bis 5 Gew.% umfasst, bezogen auf die Gesamtmenge (100 Gew.%) der das Acrylpolymer bildenden Monomerkomponente.

**8.** Die doppelseitige Haftklebefolie nach einem der Ansprüche 1 bis 7, wobei die Haftkleberzusammensetzung 5 bis 60 Gewichtsteile des Klebeharzes enthält, bezogen auf 100 Gewichtsteile des Acrylpolymers.

**Revendications**

**1.** Feuille adhésive à double face sensible à la pression comprenant un substrat en mousse polyoléfine et une couche adhésive acrylique sensible à la pression sur les deux surfaces du substrat en mousse polyoléfine,
dans laquelle le substrat en mousse polyoléfine présente une proportion de cellules fermées supérieure ou égale à 70 % en pourcentage volumique et un degré de réticulation de 3 % à 60 % en pourcentage massique, et
la couche adhésive acrylique sensible à la pression est formée à partir d'une composition adhésive sensible à la pression contenant : un polymère acrylique formé à partir d'un composant comprenant, comme composant monomère essentiel, un alkyl (méth)acrylate comportant un groupe alkyle linéaire ou ramifié ; et une résine collante.

**2.** Feuille adhésive à double face sensible à la pression selon la revendication 1, dans laquelle la couche adhésive acrylique sensible à la pression comporte une fraction de gel de 10 % à 50 % en pourcentage massique.

**3.** Feuille adhésive à double face sensible à la pression selon la revendication 1 ou 2, dans laquelle le polymère acrylique présente un indice de polydispersité [(masse moléculaire moyenne en poids) / (masse moléculaire moyenne en nombre)] de 3 à 10.

4. Feuille adhésive à double face sensible à la pression selon l'une quelconque des revendications 1 à 3, dans laquelle le polymère acrylique comprend un composant ayant une masse moléculaire inférieure ou égale 100.000 dans une proportion de 10 % à 30 % en pourcentage massique sur base du polymère acrylique.

5. Feuille adhésive à double face sensible à la pression selon l'une quelconque des revendications 1 à 4, dans laquelle la couche adhésive acrylique sensible à la pression présente une turbidité de 3 % à 30 %.

6. Feuille adhésive à double face sensible à la pression selon l'une quelconque des revendications 1 à 5, dans laquelle le polymère acrylique est formé à partir d'un composant monomère comprenant un butyl acrylate dans une proportion supérieure ou égale à 60 % en pourcentage massique sur base d'une quantité totale (100 % en pourcentage massique) du composant monomère formant le polymère acrylique.

7. Feuille adhésive à double face sensible à la pression selon l'une quelconque des revendications 1 à 6, dans laquelle le polymère acrylique est formé à partir d'un composant monomère comprenant une proportion d'acide acrylique de 1 % à 5 % en pourcentage massique sur base d'une quantité totale (100 % en pourcentage massique) du composant monomère formant le polymère acrylique.

8. Feuille adhésive à double face sensible à la pression selon l'une quelconque des revendications 1 à 7, dans laquelle la composition adhésive sensible à la pression contient de 5 à 60 parties en masse de la résine collante sur base de 100 parties en masse du polymère acrylique.

## FIG. 1

## FIG. 2

## FIG. 3

WIDTH DIRECTION OF TIP PORTION
OF WEIGHT

## FIG. 4

LENGTH DIRECTION OF TIP
PORTION OF WEIGHT

## FIG. 5

LENGTH DIRECTION OF FOAM SUBSTRATE
(WIDTH DIRECTION OF TIP PORTION OF WEIGHT)

## FIG. 6

LENGTH DIRECTION OF FOAM SUBSTRATE

## FIG. 7

## FIG. 8

*FIG. 9*

# FIG. 10

( a )

( b )

**EP 2 546 053 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001152111 A
- JP 2011156359 A